(19) Europäisches Patentamt
European Patent Office
Office européen des brevets

(11) EP 0 596 913 B1

(12) EUROPEAN PATENT SPECIFICATION

(45) Date of publication and mention
of the grant of the patent:
**09.09.1998 Bulletin 1998/37**

(51) Int Cl.6: **H04L 12/28**, H04B 7/00,
G08C 13/02

(21) Application number: **92914869.0**

(86) International application number:
**PCT/CA92/00293**

(22) Date of filing: **13.07.1992**

(87) International publication number:
**WO 93/02515 (04.02.1993 Gazette 1993/04)**

(54) **WIDE AREA COMMUNICATIONS NETWORK FOR REMOTE DATA GENERATING STATIONS**

FERNBEREICH-KOMMUNIKATIONSNETZWERK FUER FERNE DATENERZEUGENDE STATIONEN

RESEAU DE COMMUNICATIONS LONGUE PORTEE POUR STATIONS DE GENERATION DE DONNEES ELOIGNEES

(84) Designated Contracting States:
**DE ES FR IT**

(30) Priority: **19.07.1991 US 732183**

(43) Date of publication of application:
**18.05.1994 Bulletin 1994/20**

(73) Proprietor: **ITRON, INC.**
**Spokane, Washington 99216-1897 (US)**

(72) Inventors:
- **JOHNSON, Dennis, F.**
  **Winipeg, Manitoba R3N 0G7 (CA)**
- **WIEBE, Michael**
  **Winnipeg, Manitoba R2K 1C6 (CA)**
- **HOLOWICK, Erin**
  **Winnipeg, Manitoba R3R 1M7 (CA)**

- **JACOB, Nathan, R.**
  **Winnipeg, Manitoba R2K O29 (CA)**
- **MURPHY, Michael, F.**
  **Winnipeg, Manitoba R3C 4H1 (CA)**
- **SCHELLENBERG, James, J.**
  **Winnipeg, Manitoba R2M 2B7 (CA)**
- **STASENSKI, Michael, S.**
  **Winnipeg, Manitoba R2G 2J9 (CA)**

(74) Representative: **Maguire, Peter Albert et al**
**Maguire & Co.**
**5 Crown Street**
**St. Ives, Cambridgeshire PE17 4EB (GB)**

(56) References cited:
**EP-A- 244 384        EP-A- 263 421**
**EP-A- 366 342        DE-B- 2 060 843**
**DE-B- 2 205 260**

## Description

This invention relates to a communications network for collecting data from remote data generating stations, and more particularly to a radio based system for sending data from a plurality of network service modules, with each network service module attached to a meter, and communicating through remote cell nodes and through intermediate data terminals to a central data terminal.

### DESCRIPTION OF THE RELEVANT ART

Many attempts have been made in recent years to develop an automatic meter reading system for utility meters which avoids meter reading personnel having to inspect and physically note the meter readings. There are of course many reasons for attempting to develop a system of this type.

One system in the prior art has an automatic meter reading unit mounted on an existing meter at the usage site and includes a relatively small transmitter and receiver unit of very short range. An example of such a system is that disclosed in DE-B2-2,060,843 to Northern Illinois Gas Company. Using the Northern Illinois Gas system, the meter reading unit is polled on a regular basis by a travelling reading unit which is carried around the various locations on a suitable vehicle, typically a mobile van. Access to each unit is controlled by an interrogator in the travelling reading unit. The travelling reading unit polls each automatic meter reading unit in turn, using a specific identification number assigned to that particular meter reading unit, to obtain stored data. This approach is of limited value in that it requires transporting the equipment around the various locations and hence, on a practical basis, only infrequent readings can be made. There is also no provision for immediate reporting of alarm conditions, as the meter reading unit reports only when interrogated.

An alternative proposal involves an arrangement in which communication is carried out using the power transmission line of the electric utility. Communication is carried out along the line with each remote reading unit polled in turn. This device has encountered significant technical difficulties.

Another alternative is to use the pre-existing telephone lines for communication. The telephone line proposal has a significant disadvantage since a number of parties must cooperate to implement the system and the utility companies are reluctant to use a system which they cannot entirely control and manage themselves.

A somewhat related system is that disclosed in DE-B2-2,205,260 to Ing. C. Olivetti, for communicating in a uniform dialogue between a central computer and a group of data terminals, some of which are connected to the central computer through a concentrator. In response to a data terminal's signal of readiness to transmit, the data terminal communicates directly with the central computer without data buffering by a concentrator.

This provides uniformity of dialogue whether the data terminal is directly connected to the central computer or is connected to the central computer through a concentrator. This system is not at all suitable to handle the high message rate and volume of terminals inherent in a remote meter reading scenario.

A yet further system includes a meter reading device mounted on the meter with a separate transmitting antenna. The transmitting antenna is located on the building or other part of the installation site which enables the antenna to transmit over a relatively large distance. The system uses a number of receiving units, with each arranged to receive data from up to 30,000 transmitters. The transmitters, in order to achieve maximum range, are positioned to some extent directionally or at least on a suitable position of the building to transmit to the intended receiving station. This arrangement requires fewer receiving stations, improving cost efficiency. The separate transmitter antenna, however, generates significant installation problems due to the need to wire the antenna through the building to the transmitter and receiver. The high levels of power used for transmitting also require very expensive battery systems or very expensive wiring. The proposal to reduce the excessive cost was to share the transmission unit with several utilities serving the building, requiring separate utility companies to cooperate in the installation. While desirable, such cooperation is difficult to achieve on a practical basis. Finally, to avoid timing problems, the meter reading units were arranged to communicate on a random time basis. However, the very large number of meter reading units reporting to a single receiving station leads to a very high number of possible collisions between the randomly transmitted signals. The system as proposed, with signals reported daily or more often, could lose as many as 20% to 50% of the signals transmitted due to collisions or interference, resulting in very low efficiency.

An alternative radio transmission network is know as ALOHA. ALOHA has a number of broadcasting stations communicating with a single receiving station with the broadcasting stations transmitting at random intervals. In response to collisions and message loss, ALOHA monitors the retransmissions of the information from the receiving station so that each broadcasting station is aware when its transmission has been lost. Each broadcasting station is then programmed to retransmit the lost information after a predetermined, generally pseudorandom, period of time. The ALOHA system requires retransmissions of the information from the receiving station to take place substantially immediately and requires each broadcasting station to also have a receiving capability.

A system disclosed in EP-A2-0,244,384 to Sollinger presents another alternative system in which the meter reading units are remotely linked to a main computer, with the main computer polling the units periodically for usage information. Such a system is geographically limited and requires the main computer to send out polling signals with greater frequency then may often be practical.

Cellular telephone networks are also implemented on a wide scale. Cellular systems, however, use and allocate different frequencies to different remote stations. They also require sophisticated routing and switching equipment such as that disclosed in EP-A2-0,366,342 to American Telephone and Telegraph Company (AT&T). The AT&T system categorizes routing information on the basis of whether or not it changes as a mobile user moves from one cell to another. While this level of information analysis is acceptable in a high margin use for voice communications, the costs and complications cannot be accepted in the relatively lower margin use associated with remote station monitoring.

While theoretically automatic meter reading is highly desirable, it is, of course, highly price sensitive and hence it is most important for any system to be adopted that the price per unit, particularly of the large number of meter reading units, be kept to a minimum. The cost of high power transmission devices, receiving devices and battery systems generally leads to a per unit cost which is unacceptably high.

OBJECTS OF THE INVENTION

A general object of the invention is a communications network suitable for an automatic meter reading system communicating data from a plurality of network service modules to a central data terminal.

A further object of the invention is a communications network for collecting data from remote data generating stations that is simple and economic to install and maintain.

A still further object of the invention is a communications network for collecting data from network service modules that is spectrum efficient, and has inherent communication redundancy to enhance reliability and reduce operating costs.

An additional object of the invention is an open architecture communication network which accommodates new technology, and allows the network operator to serve an arbitrarily large contiguous or non-contiguous geographic area.

SUMMARY OF THE INVENTION

According to the present invention, as embodied and broadly described herein, a wide area communications network is provided for sending data from a plurality of network service modules to a central data terminal. The wide area communications network collects NSM data generated by a plurality of physical devices located within a geographical area. The physical devices may be, for example, a utility meter as used for electricity, gas or water. The wide area communications network comprises a plurality of network service modules, a plurality of remote cell nodes, a plurality of intermediate data terminals, and a central data terminal. Each network service module is coupled to a respective physical device.

The network service module (NSM) includes NSM-receiver means, NSM-transmitter means, and NSM-processor means, NSM-memory means and an antenna. The NSM-receiver means, which is optional, receives a command signal at a first carrier frequency or a second carrier frequency. In a preferred mode of operation, the NSM-receiver means receives the command signal on the first carrier frequency for spectrum efficiency. The wide area communications network can operate using only a single carrier frequency, i.e., the first carrier frequency. The command signal allows the oscillator of the NSM-transmitting means to lock onto the frequency of the remote cell node, correcting for drift. Signalling data also may be sent from the remote cell node to the network service module using the command signal.

The NSM-processor means arranges data from the physical device into packets of data, transfers the data to the NSM-memory means, and uses the received command signal for adjusting the first carrier frequency of the NSM transmitter. The NSM data may include meter readings, time of use and other information or status from a plurality of sensors. The NSM-processor means, for all network service modules throughout a geographical area, can be programmed to read all the corresponding utility meters or other devices being serviced by the network service modules. The NSM-processor means also can be programmed to read peak consumption at predetermined intervals, such as every 15 minutes, throughout a time period, such as a day. The NSM-memory means stores NSM data from the physical device. The NSM-processor means can be programmed to track and store maximum and minimum sensor readings or levels throughout the time period, such as a day.

The NSM-transmitter means transmits at the first carrier frequency the respective NSM data from the physical device as an NSM-packet signal. The NSM-packet signal is transmitted at a time which is randomly or pseudorandomly selected within a predetermined time period, i.e., using a one-way-random-access protocol, by the NSM-processor means. The NSM-transmitter includes a synthesizer or equivalent circuitry for controlling its transmitter carrier frequency. The NSM-transmitter means is connected to the antenna for transmitting multi-directionally the NSM-packet signals.

A plurality of remote cell nodes are located within the geographical area and are spaced approximately uniformly and such that each network service module is within a range of several remote cell nodes, and so that each remote cell node can receive NSM-packet signals from a plurality of network service modules. The remote cell nodes preferably are spaced such that each of the network service modules can be received by at least two remote cell nodes. Each remote cell node (RCN) includes RCN-transmitter means, RCN-receiver means, RCN-memory means, RCN-processor means, and an antenna. The RCN-transmitter means transmits at the first carrier frequency or the second carrier frequency, the command signal with signaling data. Transmitting a command signal from the RCN-transmitter means is optional, and is used only if the NSM-receiver means is used at the network service module as previously discussed.

The RCN-receiver means receives at the first carrier frequency a multiplicity of NSM-packet signals transmitted from a multiplicity of network service modules. Each of the NSM-packet signals typically are received at different points in time, since they were transmitted at a time which was randomly or pseudorandomly selected within the predetermined time period. The multiplicity of network service modules typically is a subset of the plurality of network service modules. The RCN-receiver means also receives polling signals from the intermediate data terminal, and listens or eavesdrops on neighboring remote cell nodes when they are polled by the intermediate data terminal.

The RCN-memory means stores the received multiplicity of NSM-packet signals. The RCN-processor means collates the NSM-packet signals received from the network service modules, identifies duplicates of NSM-packet signals and deletes the duplicate NSM-packet signals. When a polling signal is sent from an intermediate data terminal, the RCN-transmitter means transmits at the first carrier frequency the stored multiplicity of NSM-packet signals as an RCN-packet signal.

When a first remote cell node is polled with a first polling signal by the intermediate data terminal, neighboring remote cell nodes receive the RCN-packet signal transmitted by the first remote cell node. Upon receiving an acknowledgment signal from the intermediate data terminal, at the neighboring remote cell nodes, the respective RCN-processor means deletes from the respective RCN-memory means messages, i.e., NSM-packet signals, received from the network service modules that have the same message identification number as messages transmitted in the RCN-packet signal from the first remote cell node to the intermediate data terminal.

The plurality of intermediate data terminals are located within the geographic area and are spaced to form a grid overlaying the geographic area. Each intermediate data terminal includes IDT-transmitter means, IDT-memory means, IDT-processor means and IDT-receiver means. The IDT-transmitter means includes a synthesizer or equivalent circuitry for controlling the carrier frequency, and allowing the IDT-transmitter means to change carrier frequency. The IDT-transmitter means transmits preferably at the first carrier frequency, or the second carrier frequency, the first polling signal using a first polling-access protocol to the plurality of remote cell nodes. When the first polling signal is received by a remote cell node, that remote cell node responds by sending the RCN-packet signal to the intermediate data terminal which sent the polling signal. If the intermediate data terminal successfully receives the RCN-packet-signal, then the IDT-transmitter means sends an acknowledgment signal to the remote cell node.

The IDT-receiver means receives the RCN-packet signal transmitted at the first carrier frequency from the remote cell node which was polled. Thus, after polling a plurality of remote cell nodes, the IDT-receiver means has received a plurality of RCN-packet signals.

The IDT-memory means stores the received RCN-packet signals. The IDT-processor means collates the NSM-packet signals embedded in the RCN-packet signals received from the plurality of remote cell nodes, identifies duplicates of NSM-packet signals and deletes the duplicate NSM-packet signals, i.e., messages from network service modules that have the same message identification number. In response to a second polling signal from a central data terminal, the IDT-transmitter means transmits a plurality of RCN-packet signals as an IDT-packet signal to the central data terminal.

The central data terminal (CDT) includes CDT-transmitter means, CDT-receiver means, CDT-processor means and CDT-memory means. The CDT-transmitter means transmits sequentially the second polling signal using a second polling access protocol to each of the intermediate data terminals. The CDT-receiver means receives a plurality of IDT-packet signals. The central data terminal, intermediate data terminals and the remote cell nodes may be coupled through radio channels, telephone channels, fiber optic channels, cable channels, or other communications medium. The CDT-processor means decodes the plurality of IDT-packet signals as a plurality of NSM data. The CDT-processor means also identifies duplicates of NSM data and deletes the duplicate NSM data. The CDT-memory means stores the NSM data in a data base.

Additional objects and advantages of the invention will be set forth in part in the description which follows, and in part will be obvious from the description, or may be learned by the practice of the invention. The objects and advantages of the invention also may be realized and attained by means of the instrumentalities and combinations particularly pointed out in the appended claims.

BRIEF DESCRIPTION OF THE DRAWINGS

The accompanying drawings, which are incorporated in and constitute a part of the specification, illustrate preferred embodiments of the invention, and together with the description serve to explain the principles of the invention.

FIG. 1 illustrates the hierarchial communications network topology;
FIG. 2 is a network service module block diagram;

FIG. 3 is a representative NSM-data packet;

FIG. 4 is a listing or representative applications supported by the communications network;

FIG. 5 is a schematic diagram of a network service module;

FIG. 6 shows a front elevation view of an electricity utility meter with a detection unit;

FIG. 7 shows a bottom plan view of the electricity utility meter;

FIG. 8 is an illustration of a typical printout of information obtained by the network service module of FIG. 1;

FIG. 9 is a remote cell node block diagram;

FIG. 10 is an intermediate data terminal block diagram;

FIG. 11 is a central data terminal block diagram;

FIG. 12 shows the configuration of the communications network for serving widely separate geographic areas; and

FIG. 13 illustrates a typical communications network with gradual growth in the number of areas served.

## DETAILED DESCRIPTION OF THE PREFERRED EMBODIMENTS

Reference will now be made in detail to the present preferred embodiments of the invention, examples of which are illustrated in the accompanying drawings, wherein like reference numerals indicate like elements throughout the several views.

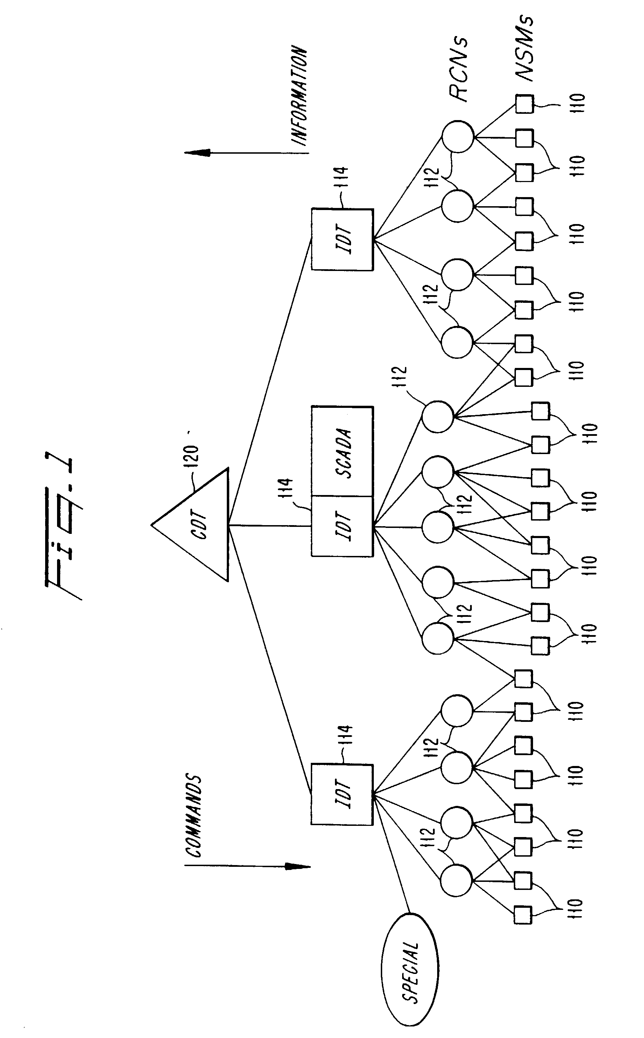

A wide area communications network communicates data from a plurality of network service modules to a central data terminal. The wide area communications network collects NSM data generated by a plurality of physical devices located within a geographical area. The wide area communications network, as illustratively shown in FIG. 1, is a layered network having a hierarchial communications topology comprising a plurality of network service modules 110, a plurality of remote cell nodes 112, a plurality of intermediate data terminals 114, and a central data terminal 120. The physical devices may be, for example, a utility meter as used for electricity, gas or water.

The central data terminal controls network operation. Intelligence exists at all layers of the network, thereby easing the workload of the central data terminal. The intelligence attributed to each module is a function of the application of that module.

## Network Service Module

Information is acquired at the lowest level of the wide area communications network of FIG. 1, and the network service module 110 performs the data acquisition functions. Network service modules 110 include meter service modules for electricity, gas and water, a service disconnect module, a load management module, an alarm monitoring module, or any other module that can be used with the wide area communications network.

The network service modules 110 are linked to the wide area communications network via high frequency radio channels, typically in the 928 MHz - 952 MHz band, as well as related frequencies in the 902 MHz - 912 MHz and 918 MHz - 928 MHz bands. Radio channels in these bands are the preferred communications medium because use of radio communications eliminates the need for physical connections to the service modules which drastically reduces installation costs compared to other communication media such as telephone, cable networks and power line carriers. Also, operation in the high frequency bands permits the use of small antennas so that retrofitting standard watt hour meters is simplified. Radio communication channels in other bands may work equally as well, however.

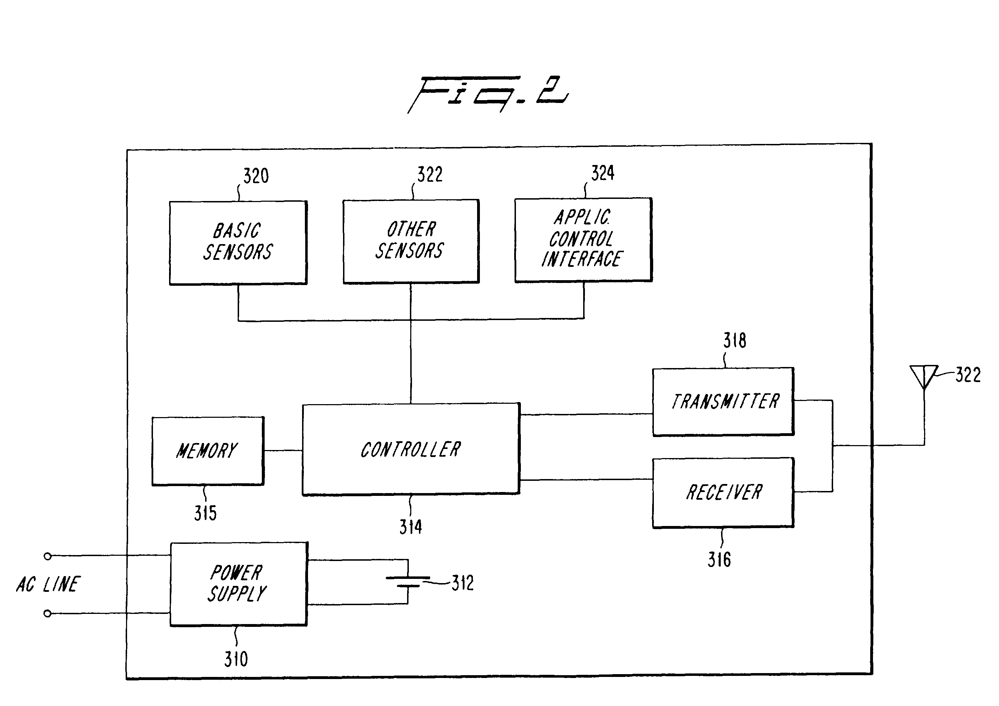

In the exemplary arrangement shown in FIG. 2, the network service module (NSM) 110 includes NSM-receiver means, NSM-transmitter means, NSM-processor means, NSM-memory means and an NSM antenna 322. The NSM-transmitter means and the NSM-receiver means are coupled to the NSM antenna 322. The NSM-processor means is coupled to the NSM-transmitter means, NSM-receiver means, NSM-memory means and the physical device. The physical device is shown as basic 320 and other sensors 322, and application control interface 324.

The NSM-receiver means is embodied as an NSM receiver 316, and is optional. If an NSM receiver 316 is included with the network service module, then the NSM receiver 316 can be used for receiving a command signal, which includes signalling data. The command signal can be transmitted at either a first carrier frequency or a second carrier frequency. Normally the first carrier frequency is used by the NSM-transmitter means for transmitting to a remote cell node. In a preferred embodiment, the NSM receiver 316 receives the command signal on the first carrier frequency for spectrum efficiency. Thus, the wide area communications network can operate using only a single carrier frequency, i.e., the first carrier frequency. The command signal can provide a time reference for updating a local clock, and serve as a frequency reference to the network service module. Signalling data, such as manage service disconnect or control loads, also may be sent from the remote cell node to the network service module using the command signal. While the network service modules could be polled by the command signal, in general, such polling is not required and preferably not used with the present invention.

The NSM-processor means, which is embodied as an NSM controller 314, arranges data from the physical device into packets of data, and transfers the data to the NSM-memory means which is embodied as an NSM memory 315. The NSM controller 314 may be a microprocessor or equivalent circuit for performing the required functions. The NSM controller 314 uses the received command signal for adjusting the first carrier frequency of the NSM transmitter. The NSM data may include meter readings, time of use and other information or status from a plurality of sensors. The NSM controllers 314, for each network service module throughout a geographical area, can be programmed to read all the corresponding utility meters or other devices being serviced by the network service module, respectively. The NSM controller 314 can be programmed to read peak consumption at predetermined intervals, such as every 15 minutes, throughout a time period, such as a day. The NSM controller 314 also can be programmed to track and store maximum and minimum sensor readings or levels throughout the time period, such as a day.

The NSM memory 315 stores NSM data from the physical device. NSM data may include meter reading data and time of use (TOU) and other information or status from a plurality of sensors. The NSM memory 315 may be random access memory (RAM) or any type of magnetic media or other memory storage devices known in the art. The NSM controller 314 uses the received command signal for adjusting the first carrier frequency of the NSM transmitter 318.

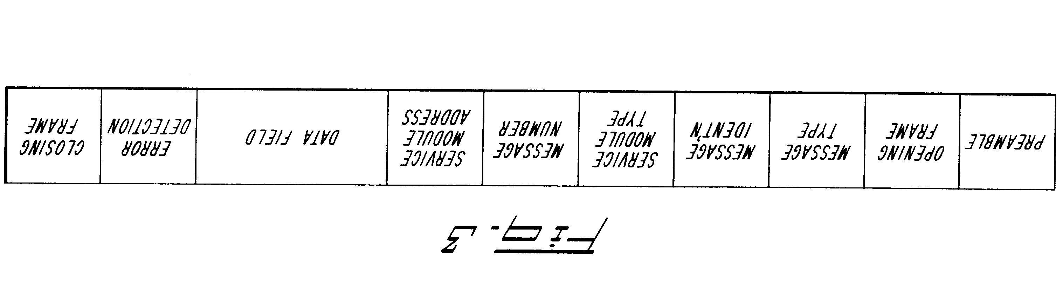

The NSM-transmitter means is embodied as an NSM transmitter 318. The NSM transmitter 318 transmits at a first carrier frequency the respective NSM data from the physical device in brief message packets called an NSM-packet signal. The NSM-packet signal might have a time duration of 100 milliseconds, although any time duration can be used to meet particular system requirements. The NSM-packet signal transmitted by the NSM transmitter 318 follows a generic or fixed format, and a representative message packet is illustrated in FIG. 3. Included in the message is: preamble; opening frame; message type; message identification; service module type; message number; service module address; data field; error detection; and closing frame.

The NSM transmitter 318 is connected to an NSM antenna 322 for transmitting multi-directionally the NSM-packet signals. The NSM transmitter 318 includes a synthesizer or equivalent circuitry for controlling its transmitter carrier frequency and schedule.

The NSM-packet signal is transmitted at a time which is randomly or pseudorandomly selected within a predetermined time period, i.e., using a one-way-random-access protocol, by the NSM-processor means. In order to simplify network operation and reduce costs, the wide area communications network does not poll individual network service modules. Rather, each network service module reports autonomously at a rate appropriate for the application being supported. Routine reports are therefore transmitted randomly or pseudorandomly at fixed average intervals, while alarm signals are transmitted immediately following detection of alarm conditions. Alarm signals may be transmitted several times with random delays. This avoids interference among alarm messages if many alarms occur simultaneously, as in an area-wide power outage.

As an alternative arrangement, the network service module may be programmed to transmit three different types of messages at different intervals. The first type of message can relate to the accumulated usage information. The second type of message can relate to an alarm condition which is basically transmitted immediately. The alarm conditions that occur might relate to a tamper action or to the absence of electrical voltage indicative of a power failure. The third type of information which may be transmitted less frequently can relate to the housekeeping information.

After preparing the packet of data for transmission, the controller 314 is arranged to hold the data packet for a random period of time. This random period can be calculated using various randomizing techniques including, for example, a pseudo-random sequence followed, for example, by an actually random calculation based upon the rotation of the metering disk at any particular instant. In this way each of the network service modules is arranged to transmit at a random time. The controller 314 is arranged so that the transmission does not occur within a particular predetermined quiet time so that none of the network service modules is allowed to transmit during this quiet time. This quiet time could be set as one hour in every eight hour period. In this way after an eight hour period has elapsed, each of the network service modules would transmit at a random time during the subsequent seven hours followed by a quiet one hour.

Network capacity or throughput is limited by the probability of message collisions at each remote cell node 112. Because all network service modules 110 share a single carrier channel and transmit at random times, it is possible for several network service modules 110 within a range of a particular remote cell 112 node to transmit simultaneously and to collide at the remote cell node. If the received signal levels are comparable, the overlapping messages will mutually interfere, causing receive errors and both messages will be lost. However, if one signal is substantially stronger than the other, the stronger signal will be successfully received. Moreover, since both signals are received by at least two and preferably four of the remote cell nodes, the probability of both messages being received is fairly high unless the network service modules are in close spatial proximity. During an interval T, each transmitter within a cell surrounding a single remote cell node sends a single randomly timed message of duration M to several potential receive stations.

$N =$    no. of transmitters/cell
$M =$    message duration (seconds)
$T =$    message interval
$P_c =$    probability of collision
$P_s =$    probability of no collision

Once any Transmitter, $T_i$, starts transmitting the probability That another particular, $T_j$, will complete or start another transmission is $\frac{2M}{T}$

The probability that there will be no collision is $1 - \frac{2M}{T}$. If there are N-1 other transmitters the probability of no collision, $P_s$, is given by

$$P_s = (1 - \frac{2M}{T})^{N-1}$$

For large N

$$P_s = (1 - \frac{2M}{T})^{N}$$

For a given Transmitter, $T_i$, the probability of a collision occurring during the interval T is

$$P_c = 1 - P_s = 1 - (1 - \frac{2M}{T})^{N}$$

The probability of collision occurring on An successive tries is

$$P_{cn} = (P_c)^{An}$$

For M = .3 Sec T = 8 hrs. = $28.8 \times 10^3$ secs.

$$P_s = (1 - \frac{2M}{T})^{N} = (1 - 2.08 \times 10^{-5})^{N} = (.999979)^{N}$$

| N | Ps | Pcl | Pc2 | Pc3 |
|---|---|---|---|---|
| 100 | .9979 | .0021 | $4 \times 10^{-6}$ | $8 \times 10^{-9}$ |
| 200 | .9958 | .0042 | $1.6 \times 10^{-5}$ | $6.4 \times 10^{-8}$ |
| 500 | .9896 | .0104 | $10^{-4}$ | $10^{-6}$ |
| 1,000 | .9794 | .0206 | $4 \times 10^{-4}$ | $8 \times 10^{-6}$ |
| 2,000 | .9591 | .041 | $1.6 \times 10^{-3}$ | $6.8 \times 10^{-5}$ |
| 5,000 | .9010 | .099 | $9.8 \times 10^{-3}$ | $9.7 \times 10^{-4}$ |
| 10,000 | .811 | .189 | $3.5 \times 10^{-2}$ | $6.7 \times 10^{-3}$ |

From the viewpoint of a remote cell node, the number of transmitters, $N_T$, whose signal level exceeds the receiver noise level and can, therefore, be received reliably depends on:

(a) the density of transmitters;
(b) transmit power level;
(c) propagation path loss;
(d) background noise.

Propagation path loss is highly variable due to attenuation, reflection, refraction and scattering phenomena which are a function of terrain, building structures, and antenna location. Some of these parameters can even vary on a diurnal and seasonal basis.

In estimating network performance however, the simple message collision model is not completely accurate because:

1. random noise bursts from various sources can obscure messages which do not collide;
2. some colliding message signals will be of sufficiently different amplitude that the stronger signal will still be received correctly.

A statistical model can be developed to provide data by which determination can be made of the best location and number of remote cell nodes for a particular geographical location. Thus, the model can include data relating to house density the N-value defined above relating to the attenuation of the signal, the location and presence of trees.

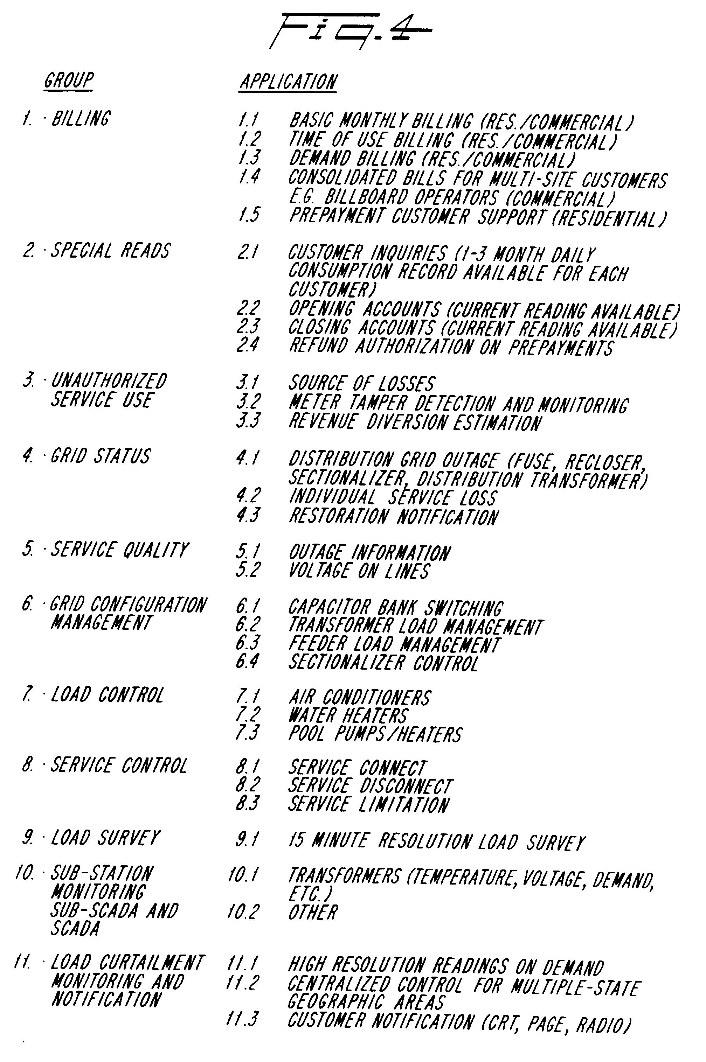

FIG. 4 is an illustrative listing of applications supported by the network service module within the wide area communications network. The following is a detailed discussion of the electricity meter application.

Network Service Module with an Electricity Meter

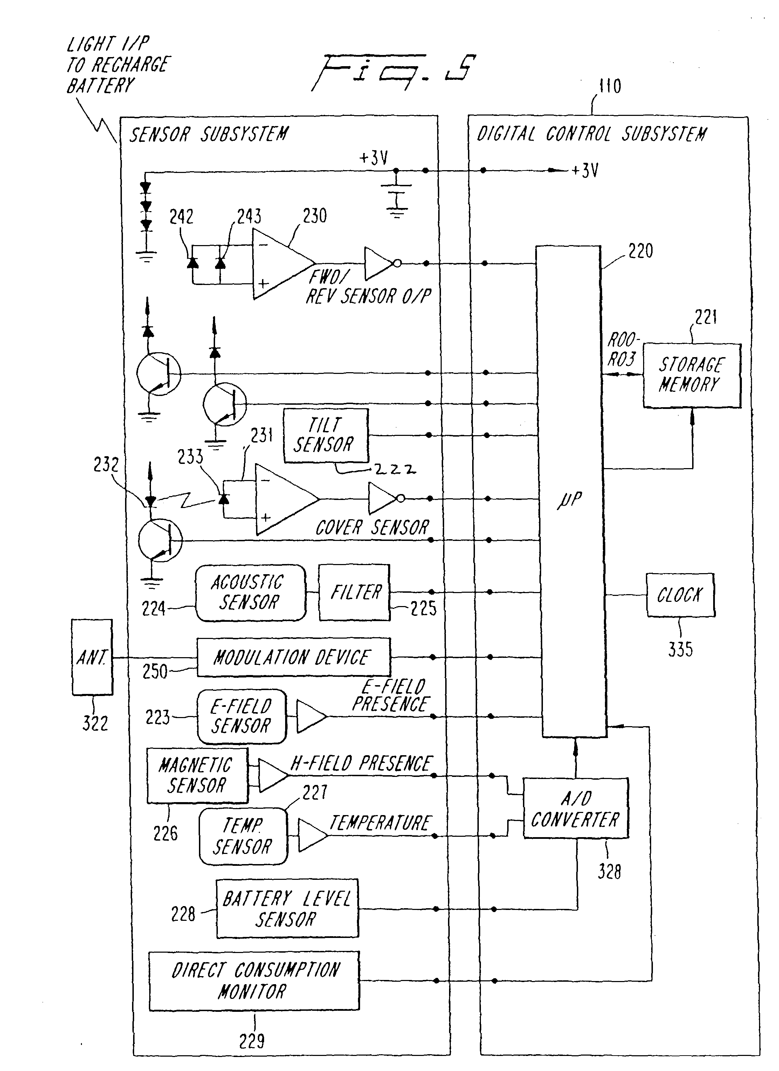

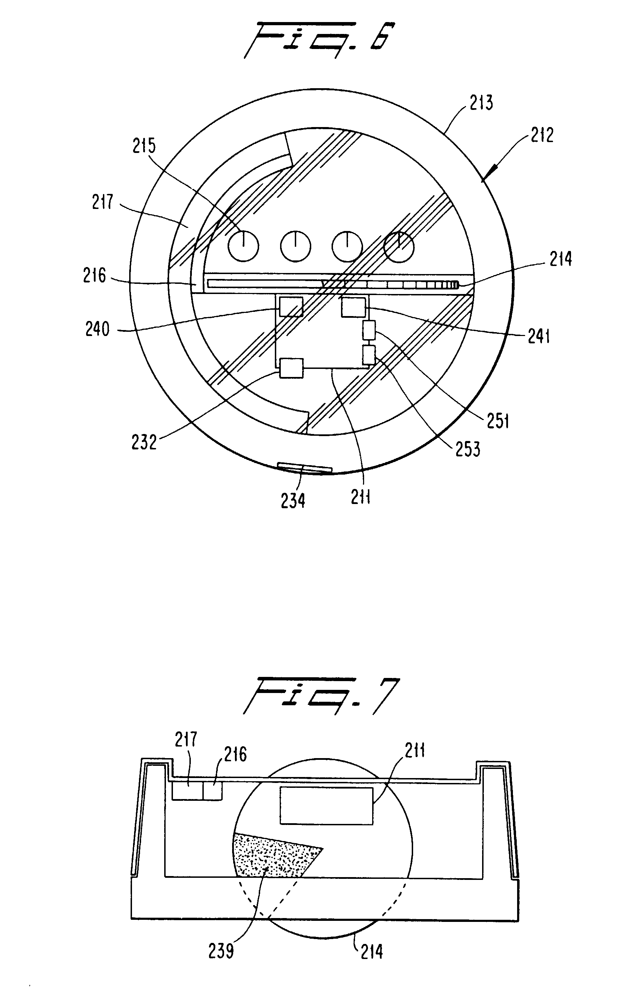

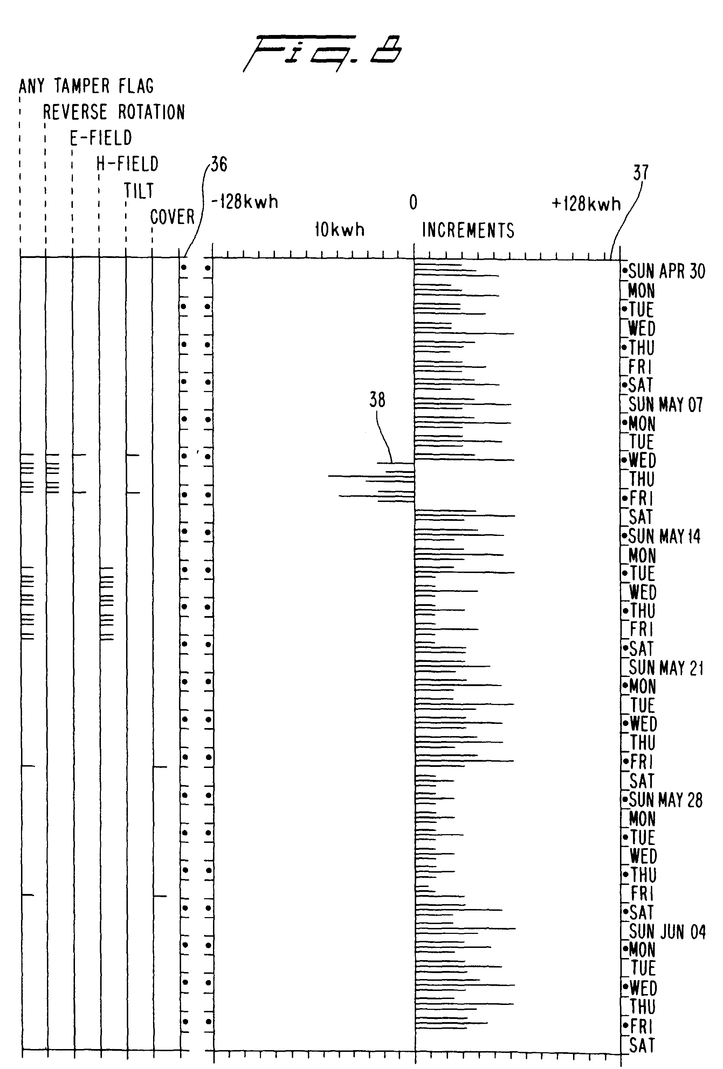

A network service module 110 schematically is shown in FIG. 5 and is mounted in a suitable housing 211 illustrated in FIGS. 6 and 7 with the housing including suitable mounting arrangement for attachment of the housing into the interior of a conventional electricity meter 212. Each network service module is coupled to a respective physical device. In FIG. 6, the physical device is an electricity meter 212.

Referring to FIGS. 5, 6 and 7 the electricity meter 212 includes an outer casing 213 which is generally transparent. Within the casing is provided the meter system which includes a disk 214 which rotates about a vertical axis and is driven at a rate dependent upon the current drawn to the facility. The numbers of turns of the disk 214 are counted by a counting system including mechanical dials 215. The meter is of conventional construction and various different designs are well known in the art.

An antenna 322 is mounted on a bracket 216 carried on the housing inside the casing 213. The antenna as shown is arc-shaped extending around the periphery of the front face. Other antenna configuration are possible.

The NSM antenna 322 of each of the network service modules 110 is mounted within the housing of the meter. Thus the NSM antenna 322 is mounted on the support structure itself of the network service module 110. This enables the network service module 110 to be manufactured relatively cheaply as an integral device which can be installed simple in one action. However, this provides an NSM antenna 322 which can transmit only relatively short distances. In addition, the power level is maintained in relatively low value of the order of 10-100 milliwatts, the energy for which can be provided by a smaller battery system which is relatively inexpensive. An NSM antenna 322 of this type transmitting at the above power level would have a range of the order of one to two kilometers.

The network service module 110 is in a sealed housing which prevents tampering with the sensors, microprocessor 220 and memory 221 located within the housing.

Turning now to FIG. 5, the network service module optionally may include a detection device which uses the microprocessor 220 which has associated therewith a storage memory 221. An essential sensor is for meter reading, for measuring the amount of electricity, amount of water or amount of gas consumed. Such a sensor alleviates having a meter reader person, by allowing the system to automatically report the amount of usage of the physical device.

Any number of sensors may be provided for detection of tampering events with the network service module of the present invention, and the sensors may be adapted for electricity, gas, water or other applications. for the most part, information reported by the various sensors would be considered low data rate. The wide area communications network supports distributed automation functions including basic meter reading, time of use meter reading, service connect and disconnect operations, alarm reporting, theft of service reporting, load research, residential load control commercial and industrial load curtailment, and distributed supervisory control and data acquisition (SCADA). Furthermore, the wide area communications network is readily expandable to support new applications as they are developed.

While the emphasis, by way of example, is automatic meter reading and on measuring time of use of an electricity meter, other functions such as 15-minute peak consumption recording, line power monitoring, i. e., outage and restoration, tamper sensing and timekeeping are supported.

The following is a representative listing of possible sensors that may be used with the network service module of the present invention. Each sensor is optional, and to a person skilled in the art, variants may be added to the network service module of the present invention.

(a) A tilt sensor 222 detects movement of the housing through an angle greater than a predetermined angle so that once the device is installed indication can be made if the device is removed or if the meter is removed from its normal orientation.

(b) A field sensor 223 detects the presence of an electric field. Unless there is power failure, the electric field sensor should continue to detect the presence of an electric field unless the meter is removed from the system.

(c) An acoustic sensor 224 detects sound. The sounds detected are transmitted through a filter 225 which is arranged to filter by analog or digital techniques the sound signal so as to allow to pass through only those sounds which have been determined by previous experimentation to relate to cutting or drilling action particularly on the cover.

(d) A magnetic sensor 226 detects the presence of a magnetic field. A magnetic field is generated by the coils driving the disk 214 so that magnetic fields should always be present unless the meter has been by-passed or removed. As is well known, the rate of rotation of the disk is dependent upon the magnetic field and, therefore, this rate of rotation can be varied by changing the magnetic field by applying a permanent or electromagnet in the area of the meter to vary the magnetic field. The sensor 226 is, therefore, responsive to variations in the magnetic field greater than a predetermined amount so as to indicate that an attempt has been made to vary the magnetic field adjacent the disk to slow down the rotation of the disk.

(e) A heat sensor 227 detects temperature so that the temperature associated with a particular time period can be recorded. A battery level sensor is indicated at 228. The sensors 226, 227 and 228 communicate information through analog digital converter indicated at 328 to the microprocessor 220. The information from sensors 227 and 228 can be communicated to provide "housekeeping" status of the operation of the unit. The sensor 227 relating to the temperature can be omitted if required and this information replaced by information gained from a public weather information source. In some cases the meter is located inside the building and hence the temperature will remain substantially constant whereas the outside temperature is well known to vary consumption quite dramatically.

(f) A consumption sensor 229 comprises a direct consumption monitor which can be of a very simple construction since it is not intended to act as an accurate measure of the consumption of the electricity used. The direct consumption monitor can, therefore, simply be a device which detects the value of the magnetic field generated on the assumption this is proportional to the current drawn. The direct assumption value obtained can then be competed with a measurement of the consumption as recorded by the rotation of the disk 211. In the event that the direct consumption monitor provides a sum of the consumption over a time period which is different from the consumption measured by rotation of the disk 211 by an amount greater than a predetermined proportion then the direct consumption monitor can be used to provide a tamper signal. This would be indicative for example of a mechanical tag applied to the disk to reduce recorded consumption.

(g) A reverse sensor 230, discussed in more detail hereinafter, detects reverse rotation of the disk 11 and provides an input to the microprocessor on detection of such an event.

(h) A cover sensor 231 is used to detect the continual presence of the cover 213. The cover sensor comprises a light emitting diode 232 which generates a light beam which is then reflected to a photo diode 233. The absence of the reflected beam at the photo diode 233 is detected and transmitted as a tamper signal to the microprocessor. The reflected beam is generated by a reflective strip 234 applied on the inside surface of the cover adjacent the diode 232 as shown in FIG. 5.

The above sensors thus act to detect various tampering events so that the presence of such tampering event can be recorded in the memory 221 under the control of the microprocessor 220.

The microprocessor 220 also includes a clock signal generator 335 so that the microprocessor 220 can create a plurality of time periods arranged sequentially and each of a predetermined length. In the example of the present invention shown the time periods are eight hours in length and the microprocessor 220 is arranged to record in each eight hour period the presence of a tamper event from one or more of the tamper signals.

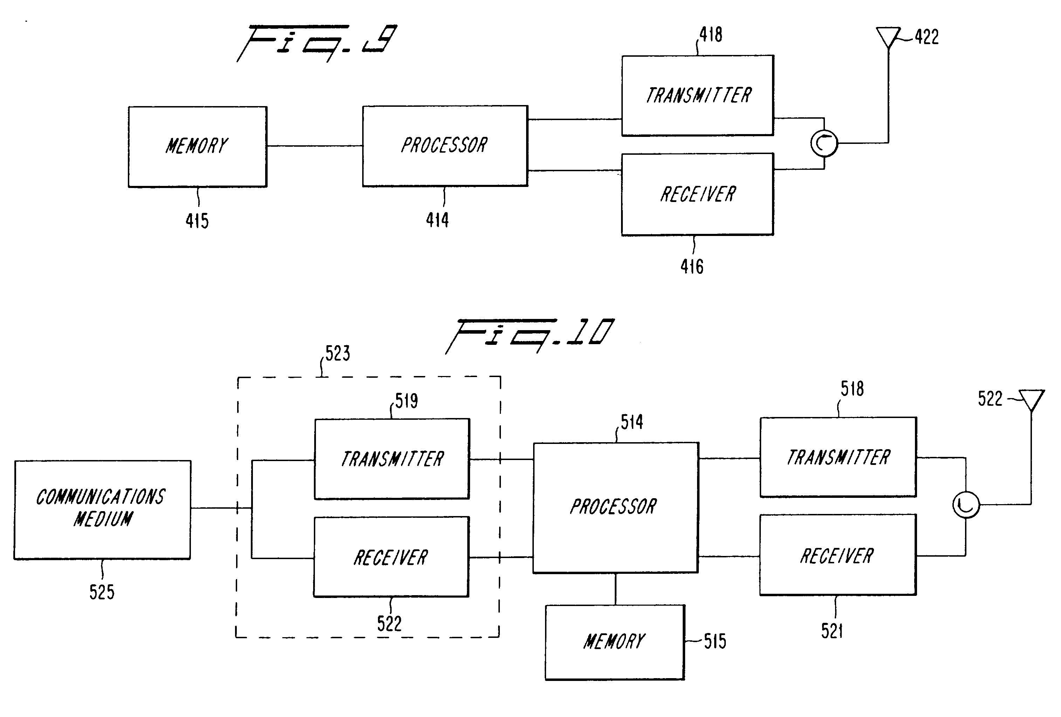

As shown in FIG. 8 the series of the predetermined time periods is recorded with the series allocated against specific dates and each eight hour period within the day concerned having a separate recording location within the memory 221. One such series is shown in FIG. 8 where a number of tampering events 36 are indicated. The print-out thus indicates when any tampering event has occurred and in addition then identifies which type of tampering event has taken place.

The rotation of the disk 211 also is detected to accurately record the number of rotations of the disk both in a forward and in a reverse direction. In FIG. 8 a table 37 shows in graphical form the amount of rotation of a disk recorded in eight hour periods as previously described. For one period of time the disk is shown to rotate in a reverse direction 38. Whenever the disk rotates in a reverse direction, the reverse rotation subtracts from the number of turns counted on the conventional recording system 215.

The detection of the rotation of the disk is carried out by the provision of a dark segment 239 formed on the undersurface of the disk leaving the remainder of the disk as a reflective or white material. The detection system thus provides a pair of light emitting diodes 240, 241 which are positioned on the housing so as to direct light onto the underside of the disk. The light emitting diodes 240, 241 are angularly spaced around the disk. The diodes are associated with the photo diodes 242, 243 which receive light when the disk is positioned so that the light from the associated light emitting diode 240, 241 falls upon the reflective part of the disk and that light is cut off when the dark part of the disk reaches the requisite location. Basically, therefore, one of the pairs of light emitting diodes 240, 241 and photo diodes 242, 243 is used to detect the passage of the dark segment that is, of course, one rotation of the disk. The direction of rotation is then detected by checking with the other of the pairs as the dark segment reaches the first of the pairs as to whether the second pair is also seeing the dark segment or whether it is seeing the reflective part. Provided the sensors are properly spaced in relation to the dimension of the segment, therefore, this indicates the direction which the disk rotated to reach the position which is detected by the first pair of diodes.

In order to conserve energy, the sensors are primarily in a sampling mode using an adaptive sensing rate algorithm. In one example the dark or non-reflective segment is 108° of arc and there is provided a 50° displacement between the sensors. In a practical example of a conventional meter, the maximum rotation rate is of the order of 2 rps. A basic sample interval can be selected at 125 M/sec, short enough to ensure at least one dark sample is obtained from the dark segment. In operation, only the first pair of sensors is sampled continuously. When a dark response is observed, a second confirming sample is obtained and the sample rate increased to 16 pps. As soon as a light segment of the disk is sensed, the second sensor is sampled. The second sensor still sees the dark segment then cw rotation is confirmed while if a light segment is observed then ccw rotation is indicated.

At slower speeds, the algorithm results in a sample rate of 8 pps for 70% of a rotation and 16 pps for 30% of a rotation for the first pair of sensors plus two samples for direction sensing for the second pair. For an annual average consumption of 12,000 kwh, the disk rotates approximately 1.6 million times.

In order to sense the presence of stray light which could interfere with measurements, the photo diode output is sampled immediately before and immediately after the LED is activated. If light is sensed with the LED off, stray light is indicated an alarm may be initiated after confirming test. The latter may include a test of other sensors such as the optical communication port sensor discussed hereinafter.

As shown in FIG. 5 communication from the meter reading unit is carried out by radio transmission from the microprocessor 220 through a modulation device 250 which connects to the antenna 322. The transmission of the signal is carried under control of the microprocessor 220. Modulation carried out by the modulation device 250 can be of a suitable type including, for example, phase modulation using phase shift keying (PSK) such as binary PSK (BPSK), frequency modulation using frequency shift keying (FSK), such as, for example, binary FSK, or spread spectrum modulation in which the signals are modulated onto a number of separate frequencies at timed intervals so that no single frequency channel is used. This allows the system to be used without the allocation of a dedicated frequency so that the signal appears merely as noise to receivers which do not have access to the decoding algorithm by which the signal can be recovered from the different frequencies on which it is transmitted.

### Remote Cell Node

A plurality of remote cell nodes 112 are located within the geographical area and are spaced approximately uniformly and such that each network service module 110 is within a range of several remote cell nodes 112. The remote cell nodes 112 typically might be spaced at 0.5 mile intervals on utility poles or light standards. Each remote cell node 112 provides coverage over a limited area much like the cell in a cellular telephone network. Remote cell nodes 112 preferably are spaced to provide overlapping coverage, so that on an average, each NSM-packet signal transmitted by a network service module 110 is received by three or four remote cell nodes 112, even in the presence of temporary fading. As a consequence, erection of a tall building near a network service module 110 has little or no effect on message reception, nor does the failure of a remote cell node 112 result in loss of NSM-packet signals or NSM data.

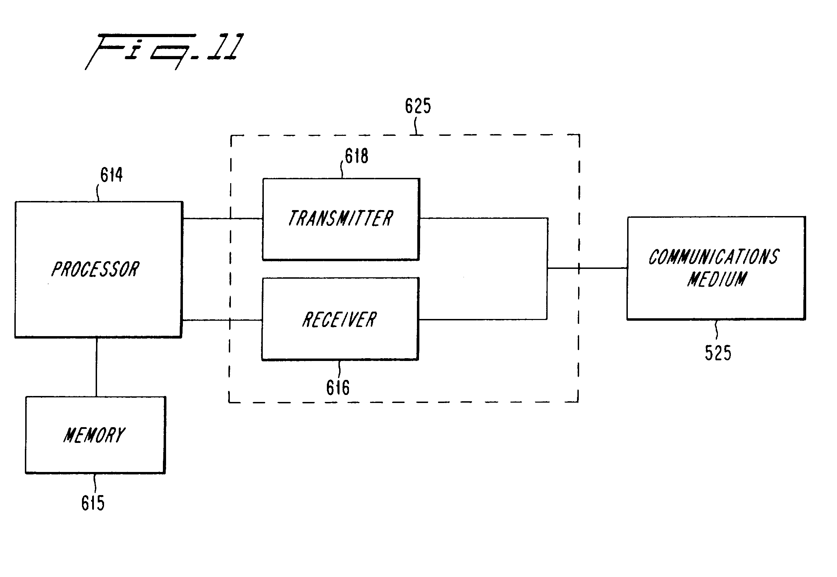

As illustratively shown in FIG. 9, each remote cell node (RCN) 112 of FIG. 1 includes first RCN-transmitter means, second RCN-transmitter means, RCN-receiver means, RCN-memory means, RCN-processor means and an RCN antenna 422. The RCN-transmitter means, RCN-receiver means, RCN-memory means and RCN-processor means may be embodied as an RCN transmitter 418, RCN receiver 416, RCN memory 415 and RCN processor 414, respectively. The RCN transmitter 418 and the RCN receiver 416 are coupled to the RCN antenna 422. The RCN processor 414 is coupled to the RCN transmitter 418, RCN receiver 416, and RCN memory 415.

The RCN transmitter 418, under the control of the RCN processor 414, transmits at the first carrier frequency or the second carrier frequency a command signal. The choice of frequency depends on which frequency is being used for the NSM receiver 316 at each of the plurality of network service modules 110. Transmitting a command signal from the RCN transmitter is optional, and is used if the NSM receiver 316 is used at the network service module 110. The command signal can include signalling data being sent to network service modules 110. The signalling data may require the network service module 110 to transmit status or other data; set reporting time period, e.g. from an eight hour period to a four hour period; and any other command, control or "housekeeping" jobs as required.

The RCN receiver 416 receives at the first carrier frequency a multiplicity of NSM-packet signals transmitted from a multiplicity of network service modules 110. Each of the multiplicity of NSM-packet signals typically are received at different points in time, since they are transmitted at a time which is randomly or pseudorandomly selected within the predetermined time period. The multiplicity of network service modules 110 usually is a subset of the plurality of network service modules 110. Received NSM-packet signals are time stamped by the RCN processor 414 and temporarily stored in the RCN memory 415 before being transmitted to the next higher network level. The RCN receiver 416 also receives polling signals from the intermediate data terminal, and listens or eavesdrops on neighboring remote cell nodes when they are polled by the intermediate data terminal.

The RCN processor 414 collates the NSM-packet signals received from the network service modules, identifies duplicates of NSM-packet signals and deletes the duplicate NSM-packet signals. The RCN processor 414 controls the RCN transmitter 418 and RCN receiver 416. The RCN memory 415 stores the received multiplicity of NSM-packet signals. Thus each remote cell node 112 receives, decodes and stores in RCN memory 415 each of these data packets as received from the network service modules 110.

The remote cell node comprises simply a suitable resistant casing which can be mounted upon a building, lamp standard or utility pole at a suitable location in the district concerned. The remote cell node can be battery powered with a simple omni-directional antenna as an integral part of the housing or supported thereon.

Information accumulated at remote cell nodes 112 periodically is forwarded via a polled radio communications link to a higher level network node, as illustrated in FIG. 1, termed an intermediate data terminal 114. The intermediate data terminals 114 are spaced typically at 4 mile intervals and can be conveniently cited at substations, providing coverage for up to 100 cells. Remote cell nodes also receive timing information and command signals from intermediate data terminals.

When a polling signal is sent from an intermediate data terminal 114, the RCN transmitter 418 transmits at the first carrier frequency the stored multiplicity of NSM-packet signals as an RCN-packet signal to the intermediate data terminal 114.

When a first remote cell node is polled with a first polling signal by the intermediate data terminal, neighboring remote cell nodes 112 receive the RCN-packet signal transmitted by the first remote cell node. Upon receiving an acknowledgment signal from the intermediate data terminal that polled the first remote cell node, at the neighboring remote cell nodes 112 the respective RCN processor deletes from the respective RCN memory messages from the network service modules that have the same message identification number as messages transmitted in the RCN-packet signal from the first remote cell node to the intermediate data terminal. The message identification number is illustrated in a typical NSM-data packet in FIG. 3.

FIG. 1 illustrates a plurality of the network service modules 110. The network service modules 110 are set out in a pattern across the ground which is dependent upon the positions of the utility usage which generally does not have any particular pattern and the density will vary significantly for different locations.

The remote cell nodes 112 are arranged in an array with the spacing between the remote cell nodes 112 relative to the network service modules 110 so that each remote cell node 112 can transmit to at least two and preferably four of the remote cell nodes 112. Thus, the remote cell nodes 112 are provided in significantly larger numbers than is absolutely necessary for each network service module 110 to be received by a respective one of the remote cell nodes 112. The remote cell nodes 110 theoretically receive high levels of duplicate information. In a normal residential situation, the location of the remote cell nodes 112 so that each network service module 110 can be received by four such remote cell nodes 112 would lead to an array in which each remote cell node 112 would be responsive to approximately 1,000 of the network service modules 110.

Each of the network service modules 110 is arranged to calculate an accumulated value of utility usage for a set period of time which in the example shown is eight hours. Subsequent to the eight hour period, the NSM controller 314 prepared to transmit the information in a packet of data as an NSM-packet signal. The packet of data includes:

(a) The total of usage during the set period, i.e., eight hours.
(b) The accumulated total usage stored in the NSM memory 315 to date. The transmission of this information ensures that even if a message is lost so that the total for one of the time periods is not communicated to the central data terminal, the central data terminal 120 can recalculate the amount in the missing time periods from the updated accumulated total.
(c) Some or all of the tamper signals defined above.
(d) The time of transmission.
(e) A message number so that the messages are numbered sequentially. In this way, again the remote cell node 112 can determine whether a message has been lost or whether the information received is merely a duplicate message from a duplicate one of the receiving stations.
(f) "Housekeeping information" concern the status of the network service module 110, for example, the temperature and the battery level indicator sensor values.

When information is received at the remote cell node 112, the RCN controller 414 acts to store the information received in the RCN memory 415 and then to analyze the information. The first step in the analysis is to extract from the received messages the identification code relating to the respective network service module 110. The information relating to that network service module 110 is introduced into a RCN memory register relating to that network service module 110 to update the information already stored.

One technique for avoiding transmission of duplicate information from the remote cell nodes 112 to the intermediate data terminal 114 can be used in which each remote cell note 112 monitors the transmissions of the other remote cell nodes 112. When the signals are monitored, the information transmitted is compared with information stored in any other remote cell node 112 doing the monitoring and if any information is found in the memory of the remote cell node 112 which is redundant, that information is then canceled. In this way when very high levels of redundancy are used, the time for transmission from the remote cell node 112 to the intermediate data terminal is not significantly increased.

In addition to the transmission periodically of the usage data, each network service module 110 can be arranged to transmit an alarm signal upon detection of the removal of the electric voltage. The transmission of the alarm signal can be delayed by a short random period of time so that if the loss of the voltage is due to a power outage covering a number of locations all signals are not received at the same time. The remote cell nodes 112 and intermediate data terminals 114 also can be programmed to retransmit such alarm signals immediately. In this way the central data terminal 120 has immediate information concerning any power outages including the area concerned. This can, of course, enable more rapid repair functions to be initiated.

Furthermore, the remote cell nodes 112 can be arranged to transmit control signals for operating equipment within the premises in which the network service module 110 is located. The remote cell nodes 112 are necessarily arranged in a suitable array to transmit such information so that it is received in each of the premises concerned using again relatively low transmission power and using the equipment provided for the meter reading system. This transmission capability can be used to control, for example, radio controlled switches within the premises of relatively high power equipment for load shedding at peak periods. In similar arrangements the network service module 110 may include a receiving facility to enable detection of signals transmitted by the remote cell nodes 112. In one example, these signals may relate to synchronizing signals so that each of the network service modules 110 is exactly synchronized in time with the remote cell node 112 and/or intermediate data terminal 114 and central data terminal 120. This exact synchronization can be used for accurately detecting usage during specific time periods so that the utility may charge different rates for usage during different time periods for the purpose of particularly encourage use at non-peak times again for load shedding purposes.

The attenuation of a radio signal is proportional to the inverse of the distance from the source to the power N. In free space N is equal to 2. In more practical examples where buildings, trees and other geographical obstructions interfere with the signal N general lies between 4.0 and 5.0. This effect, therefore, significantly reduces the distance over which the signal from the network service module can be monitored. Thus, the number of network service modules is significantly reduced which can be monitored by a single remote cell node. Furthermore, the large N rapidly reduces the signal strength after a predetermined distance so that while a network service module can be effectively monitored at a certain distance, the signal strength rapidly falls off beyond that distance. This enables the cells defined by each remote cell node 112 to be relatively specific in size and for the degree of overlap of the cells to be controlled to practical levels without wide statistical variations.

An advantage of the present system is that network service modules 110 which are located at a position which is geographically very disadvantageous for transmission to the closest remote cell node 112 may be monitored by a different one of the remote cell nodes 112. Thus, in conventional systems some of the network service modules 110 may not be monitored at all in view of some particular geographical problem. In the present invention this possibility is significantly reduced by the fact that the network service module 110 concerned is likely to be in a position to be monitored by a large number of the remote cell nodes 112 so that the geographical problem most probably will not apply to all of the remote cell nodes.

The increased density of remote cell nodes 112 permits the network service modules 110 to operate with an integral NSM antenna 322 which can be formed as part of the meter reading unit housed within the conventional electric utility meter. In this way the network service module 110 can be totally self contained within the meter housing thus allowing installation within a very short period of time, avoiding customer dissatisfaction caused by wiring problems and reducing the possibility of damage to a separately mounted NSM antenna 322. In addition this arrangement significantly reduces the cost of the network service module 110 to a level which is economically viable to allow installation of the system.

The present invention can employ a system is which the network service modules 110 are permitted to transmit only during a predetermined time period so that an open time period is available for communication on the same frequency between the intermediate data terminal 114 and the remote cell node 112 without any interference from the remote cell nodes 112. This level of communication can be carried out using a polling system from the intermediate data terminals 114 to each of the remote cell nodes 112 in turn preferably including a directional transmission system at the intermediate data terminal 114. This system allows optimization of the remote cell node 112 density to meet cost/performance criteria in different deployment scenarios.

The present invention, by recognizing the non-volatile nature of the information source and the acceptability of missing an occasional update through transmission errors or collisions enables the implementation of data collection networks of greater simplicity and at lower cost than is possible with established communication network approaches involving two-way communication.

The present invention, therefore, provides a radio communication network which can be employed to acquire data from a large number of remote meter monitoring devices disposed over a wide area using very low power transmitters in conjunction with an array of remote cell nodes all operating on a single radio communication channel or frequency.

Intermediate Data Terminal

The plurality of intermediate data terminals 114 are located within the geographic area and are spaced to form a grid overlaying the geographic area. The intermediate data terminals 114 typically are spaced to cover large geographic areas. Intermediate data terminals 114 preferably are spaced to provide overlapping coverage, so that on an average, an RCN-packet signal transmitted from a remote cell node 112 is received by two or more intermediate data terminals.

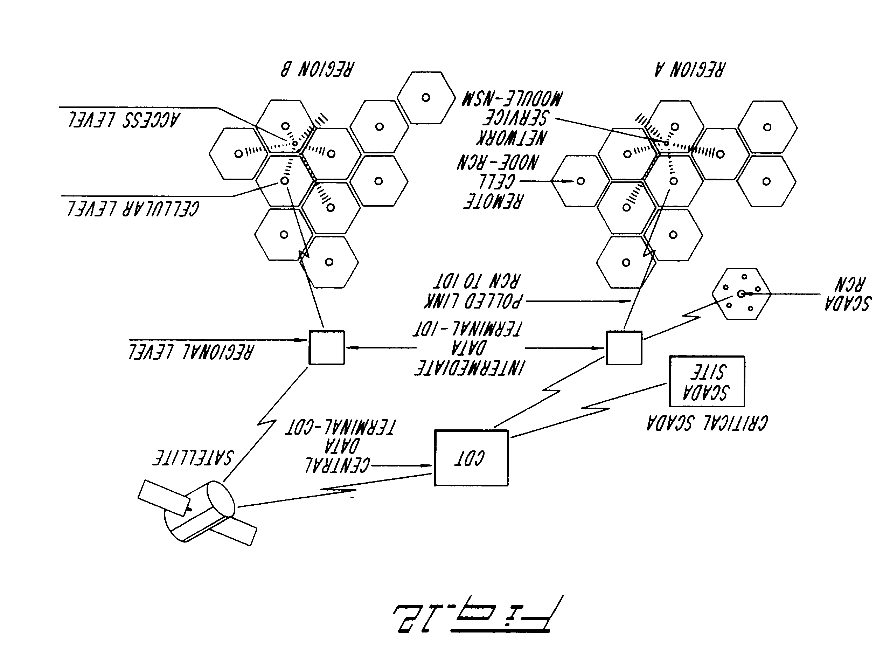

As illustratively shown in FIG. 10 each intermediate data terminal 114 includes first IDT-transmitter means, second IDT-transmitter means, IDT-memory means, IDT-processor means, first IDT-receiver means, second IDT-receiver means and an IDT antenna. The first IDT-transmitter means, second IDT-transmitter means, IDT-memory means, IDT-processor means, first IDT receiver means and second IDT-receiver means may be embodied as a first IDT transmitter 518, second IDT transmitter 519, IDT memory 515, IDT processor 514, first IDT receiver 521 and second IDT receiver 522, respectively. The first IDT transmitters 518 and the first IDT receiver 521 are coupled to the IDT antenna 522. The IDT processor 514 is coupled to the first and second IDT transmitters 518, 519, the first and second IDT receivers 521, 522 and IDT memory 515. The second IDT transmitter 519 and second IDT receiver 522 may be embodied as a device such as a modem 523.

The first IDT transmitter 518 under the control of the IDT processor 514, includes a synthesizer or equivalent circuitry for controlling the carrier frequency, and allowing the first IDT transmitter 518 to change carrier frequency. The first IDT transmitter 518 transmits preferably at the first carrier frequency, or the second carrier frequency, the first polling signal using a first polling-access protocol to the plurality of remote cell nodes 112. When the first polling signal is received by a remote cell node, that remote cell node responds by sending the RCN-packet signal to the intermediate data terminal 114 which sent the polling signal. If the intermediate data terminal 114 successfully receives the RCN-packet-signal, then the first IDT transmitter 518 sends an acknowledgment signal to the remote cell node. Upon receiving the acknowledgment signal, from the RCN processor 414 at the remote cell node deletes, from the RCN memory 418, the data sent in the RCN-packet signal to the intermediate data terminal.

Intermediate data terminals 114 also communicate timing information and command signals to remote cell nodes 112. Remote cell nodes 112 serving important SCADA functions can be polled more frequently by an intermediate data terminal 114 to reduce network response time.

The first IDT receiver 521 receives the RCN-packet signal transmitted at the first carrier frequency from the remote cell node which was polled. Thus, after sequentially polling a plurality of remote cell nodes 112, the first IDT receiver 521 has received sequentially in time a plurality of RCN-packet signals.

The IDT memory 515 stores the received RCN-packet signals. The IDT processor 514 collates the NSM-packet signals embedded in the RCN-packet signals received from the plurality of remote cell nodes, identifies duplicates of NSM-packet signals and deletes the duplicate NSM-packet signals, i.e., messages from network service modules that have the same message identification number.

In response to a second polling signal from a central data terminal 120, the second IDT transmitter 519 transmits a plurality of RCN-packet signals as an IDT-packet signal to the central data terminal 120. The second IDT transmitter 519 and second IDT receiver 522 may be embodied as a modem 523 or other device for communicating information over a communications medium 525 linking the intermediate data terminal with the central data terminal.

The intermediate data terminals 114 may include one or more directional antennas 522. During the quiet time, the intermediate data terminal 114 is arranged to direct the antenna 522 or antennas to each of the remote cell nodes 112 in turn and to transmit to the respective remote cell node 112 a second polling signal calling for the remote cell node 112 to transmit the stored information from the RCN memory 415. Use of more than one antenna can allow communication with more than one remote cell node 112 at a time. The remote cell node 112 is required, therefore, merely to transmit the information which is transmitted to the intermediate data terminal 114 and collected for analysis.

Central Data Terminal

At the upper level of the hierarchy is a central data terminal 120 which acts as a network control center and data consolidation point. The central data terminal 120 controls basic network operation, allowing it to make global decisions regarding network organization. The central data terminal's purpose is to integrate information from a variety of network nodes into a coherent form which may be forwarded to different utility operating groups for specific applications. In addition to linking regional data terminals, the central data terminal 120 is connected to critical SCADA sites some of which may be co-located with intermediate data terminals 114 at sub-stations. At this level, there are relatively few communication links, so those required can be selected to optimize cost, speed and reliability. The transmission between the central data terminal 120 and the plurality of intermediate data terminals 114 is carried out using a communications medium 525 such as telephone lines, T1 carriers, fiber optic channels, coaxial cable channels, microwave channels, or satellite links.

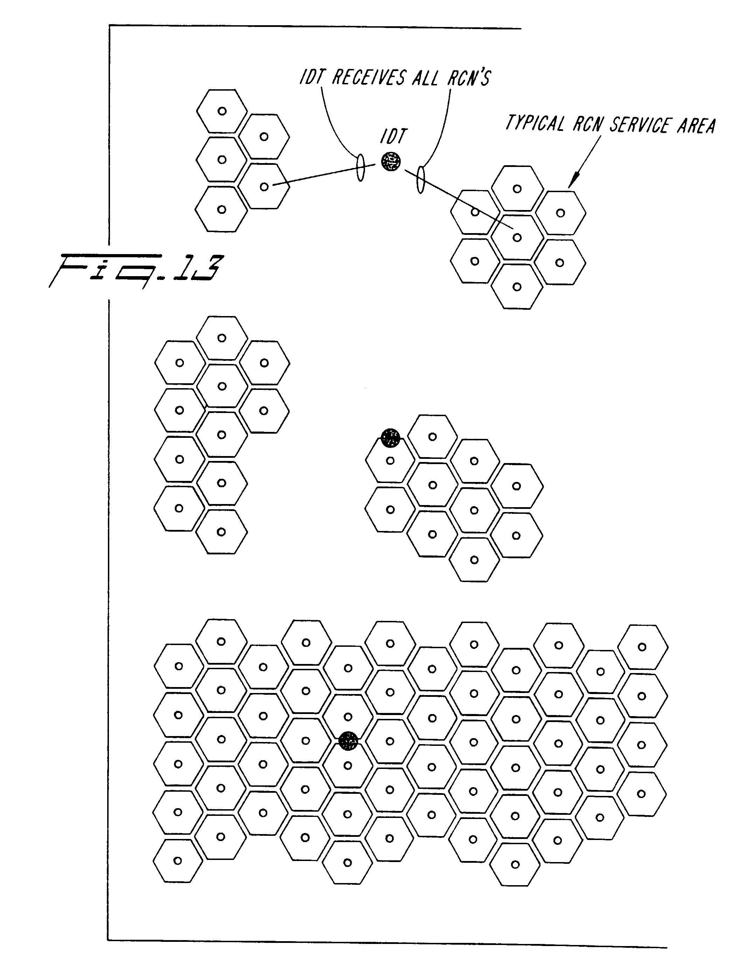

As illustratively shown in FIG. 11, the central data terminal (CDT) 120 includes CDT-transmitter means, CDT-receiver means, CDT-processor means and CDT-memory means. The CDT-transmitter means, CDT-receiver means, CDT-processor means and CDT-memory means may be embodied as a CDT transmitter 618, CDT receiver 616, CDT processor 614 and CDT memory 615, respectively. The CDT transmitter 618 and CDT receiver 616 are coupled to the communications medium 525. The CDT processor 614 is coupled to the CDT transmitter 618, CDT receiver 616 and CDT memory 615. The CDT transmitter 618 and CDT receiver 616 may be a modem 625 or other device suitable for communicating information over the communications medium 525 between the central data terminal 120 and each intermediate data terminal 114.

The CDT transmitter 618 transmits sequentially in time the second polling signal using a second polling access protocol to the plurality of intermediate data terminals 114. The CDT receiver 616 receives a plurality of IDT-packet signals. The CDT processor 614 decodes the plurality of IDT-packet signals as a plurality of NSM data. The CDT processor 614 also identifies duplicates of NSM data and deletes the duplicate NSM data. The CDT memory 615 stores the NSM data in a data base. The NSM data is outputted, analyzed or processed as desired.

Utility Overview

The performance of the network is in large part determined by the network service module 110 to remote cell node 112 link performance, which is defined by the network service module message loss rate. The network architecture is designed to minimize the network service module message loss rate, which is defined as the fraction of transmitted network service module messages which are not received by the remote cell nodes. The two issues that affect the message loss rate are:

1. relatively large and varying pathloss which is caused by the nature of the urban propagation environment; and

2. simultaneous message transmissions, or collisions, which are a problem for any multiple-access system.

The issue of large and varying pathloss is resolved through the use of:

1. transmit power adjustment;

2. path redundancy, controlled by the remote cell node grid spacing; and

3. multiple transmissions per day.

The collision issue is resolved using:

1. path redundancy, controlled by the remote cell node grid spacing;
2. multiple transmission per day;
3. partitioning of traffic according to priority; and
4. capture effect.

Remote cell node spacing can be selected to control the path redundancy, thus leading to an adjustable level of performance. Notice that path redundancy and multiple transmission per day are used to resolve both issues, and thus are principle features of the wide area communications network. The effect of collisions is minimal, so the probability of receiving a packet any time during the day is maintained at exceptionally high levels.

The link budget contains all of the gains and losses between the network service module power amplifier and the remote cell node receiver, and is used to calculate the maximum pathloss which can be allowed on any link. The minimum receivable signal at the remote cell node is estimated as as -115 dBm, which is equal to the sum of the noise floor and the carrier to the noise level which is required in order to receive the message (10dB).

Every network service module has many remote cell nodes within receiving range, which increases the reliability of packet reception. When a network service module transmits it has the potential to be received by many remote cell modules. Some of the remote cell modules are in shadow fading zones and do not receive the signal whereas others have an increased signal due to shadowing.

Even though some of the remote cell nodes 112 are quite far from the network service module 110, and thus the average pathloss is below the maximum allowed limit, it is still possible to receive the network service module if the signal level fluctuations, shadowing, multipathing, etc., contribute enough to the signal level. Similarly, some remote cell nodes which are close to the network service module do not hear the network service module because the signal variations decrease the signal network level by a significant amount.

During the life of the system, the urban landscape changes due to building construction and demolition and foliage growth. These changes in landscape affect the network service module-remote cell node links, causing some remote cell nodes to no longer receive the network service module while new remote cell nodes do receive the network service module. For each link that is no longer available it is expected that a new link becomes operational.

The wide area communications network can readily and cost effectively expand to support new hardware and application software growth scenarios. The wide area communications network can be implemented in those regions of the user's service territory and for those services which are most needed on an implementation plan which is not affected by geographic distribution. FIG. 12 illustrates the configuration of the wide area communications network for serving widely separated geographic areas. This includes the provision of wide area communications network services to isolated smaller communities via satellite, fibre optic, microwave or other back bone network. Due to the unique nature of wide area communications network's single channel, micro cellular scattering propagation concept, it is immune to traditional radio problems such as fading, nulls, multi-path, lack of line of sight typical of mountainous, hilly, valley or high density urban setting.

The wide area communications network supports a broad range of monitoring, verifiable control and fast response transaction applications. A number of these application needs are and continue to be identified by utilities. Due to the standardized network interface protocol and message packet configuration, the wide area communications network is able to readily augment its service offerings in either new hardware or software. The wide area communications network offers not only specialized network service modules for electric, gas and water meters but also provides a series of generic modules with industry standard in/output interfaces for contact closure, voltage or current sensing. This allows a variety of vendors to incorporate a wide area communications network communication interface into their own products be they fuses, alarms, temperature sensors, etc.

The wide area communications network can provide a single integrated data channel for other utility operational applications. Some of these applications are hardware oriented but many are application software oriented. They involve the generation of new value-added information reports or services. Although some are primarily for use by the utility, many of them could be offered for sale to the customer thus resulting in a new revenue stream for the utility.

The wide area communications network can support the expansion of SCADA due to its highly reliable wireless communication capabilities. Many utilities would like to add instrumental monitoring points to their SCADA, however, the wiring costs or difficulties often associated with these prohibits SCADA growth at a substation or other site. Generic network service modules could be used to solve these problems.

The hierarchical design of wide area communications network allows the customer to service an arbitrarily large contiguous or non-contiguous geographic area, as shown in FIG. 12, containing many applications and a large number of end points.

The key issues related to expansion are:

1. The size and arrangement of the geographic area;
2. The number of end points which can be serviced;

and

3. The ease with which the number of applications can be increased.

The hierarchical design of the network allows non-contiguous areas to be serviced over a wide geographic area. Separate areas have their own intermediated data terminal communicating with the central data terminal. Data from non-contiguous areas would be transferred at the central data terminal level.

As the number of end points increases, either due to an increase in the number of applications in a geographic area or due to an increase in the size of the geographic area being serviced, the network traffic increases. The amount of additional traffic created depends on the type of application being added. Traffic increases in the wide area communications network are dealt with by hardware expansion at the central data terminal and by installation of additional intermediate data terminals in the new area. FIG. 13 illustrates a typical communications network with gradual growth in the number of areas served.

As the number of end points increases, another issue of concern is the identification of the message source. Wide area communications network provides over one trillion serial numbers for each type of service module, which allows unique module identification over the life of the system.

As the number of applications increases, the amount of traffic from a given square mile is assumed to also increased. Simulations to the present time have indicated that more than 20,000 end points can be serviced per square mile, with this maximum number depending on the details of remote cell node deployment, house density and message reporting frequency. A dense urban area with 35 ft. by 100 ft. lots contains approximately 5000 homes per square mile.

Centralized control of wide area communications network is achieved by allowing the central data terminal to have access to network status data, which it uses to make decisions regarding network optimization. These decisions are downloaded to the intermediate data terminals and remote cell nodes as required.

Centralized traffic control is achieved at the remote cell node and intermediate data terminal levels by using priority tables, message storage instructions and alarm storage instructions. The structure of the priority tables is described as follows.

In each message that is transferred through the system, there is a set of identification tags stating the message type and the source. The priority tables in the remote cell nodes 112 and intermediate data terminals 114 contain a listing of all identification tags in the system and the priority tables are first installed at the time of deployment, but can be updated from the central data terminal 120 as required. During the network operational period there may be a need to change message priorities, which can then be performed with minimal impact on the network traffic.

Control of the alarm traffic within the network requires another table because alarm reporting generates higher traffic levels for a short period of time. This bursty traffic generation can lead to congestion problems, and so an alarm instruction table allows the central data terminal to clear alarm messages out of remote cell node and intermediate data terminal buffers at the end of the alarm. This priority table also allows the utility to tailor the alarm traffic delay to suit its particular needs.

Both the priority tables and the alarm instructions are used by the message storage instruction module to properly manage traffic on the network. The message storage instructions maintain the message queue, ensure that response times are within specification, and transmit performance data to the central data terminal to be used for network control.

The network service modules transmit messages to the remote cell nodes, which then use the tables discussed above to organize the message queue. All messages reach the application switch with the specified delay. The central data terminal downloads data to the three control modules and tables as required.

## Claims

1. A communications network for collecting data generated by a plurality of physical devices located within a geographic area and transmitting that data to a central location, characterised in that the network comprises:

a plurality of network service modules (NSM) (110), with each network service module coupled to a respective physical device (320, 322, 324) generating respective NSM-data, with each network service module (110) including an NSM-transmitter (318) for transmitting by wireless radio the respective NSM-data from the respective physical device (320, 322, 324) as an NSM-packet signal;
a plurality of remote cell nodes (RCN) (112) located within the geographic area and spaced with each network service module (110) within a range of at least two remote cell nodes (112), with each remote cell node including an RCN-receiver (416) for receiving a multiplicity of NSM-packet signals transmitted from a multiplicity of network service modules (110), and an RCN-transmitter (418) for transmitting the multiplicity of NSM-packet signals as an RCN-packet signal;
a central data terminal (CDT) (120) having a CDT-receiver (616) for receiving a plurality of RCN-packet signals, a CDT-processor (614) for decoding the plurality of RCN-packet signals as a plurality of NSM-data, and
a CDT-memory (615) for storing the plurality of NSM-data in a data base.

2. A network as claimed in Claim 1, wherein the transmitted NSM-packet signals are simultaneously received by at least two remote cell nodes.

3. A network as claimed in Claim 1 or Claim 2, further comprising:-

a plurality of intermediate data terminals (IDT) (114), each intermediate data terminal including
an IDT-receiver (152) for receiving a multiplicity of RCN-packet signals transmitted from a multiplicity of remote cell nodes (110), and
an IDT-transmitter (519) for transmitting the multiplicity of RCN-packet signals as an IDT-packet signal to said central data terminal (120); and
wherein said CDT-processor (614) is operable to decode a plurality of IDT-packet signals as a plurality of NSM-data for storage in said CDT-memory (615).

4. A network as claimed in Claim 3, wherein each of said network service modules (110) includes:-

NSM-processor means (314) responsive to detection of an alarm condition to generate an alarm signal, and
wherein said NSM-transmitter (318), responsive to the alarm signal, transmits an NSM-packet signal having the alarm signal;
wherein each remote cell node includes RCN-processor means (414), responsive to receipt of the alarm signal, to cause said RCN-transmitter (418) to transmit an RCN-packet signal having the alarm signal; and
wherein each intermediate data terminal includes IDT-processing means (514), responsive to receipt of an RCN-packet signal having the alarm signal to cause said IDT-transmitter (519) to transmit an IDT-packet signal having the alarm signal.

5. A network as claimed in Claim 3 or Claim 4, wherein said IDT-transmitter (518), responsive to receipt of a respective one of the multiplicity of RCN-packet signals from a respective one of the multiplicity of RCN-packet signals from a respective one of the multiplicity of remote cell nodes (112), sends an acknowledgement signal to the respective one of the multiplicity of remote cell nodes.

6. A network as claimed in Claim 5, wherein the respective one of the multiplicity of remote cell nodes (112), responsive to receipt of the acknowledgement signal, overwrites the multiplicity of NSM-packet signals upon receipt of additional NSM-packet signals.

7. A network as claimed in any one of claims 3 to 6, wherein each NSM-transmitter transmits an NSM-packet signal at a time pseudorandomly selected within a pre-determined time period;

wherein the RCN-receiver (416) receives a multiplicity of NSM-packet signals transmitted from a multiplicity of network service modules (110) which multiplicity includes a subset of said plurality of network service modules:
wherein the RCN-transmitter (418) is responsive to a first polling signal to transmit the stored multiplicity of NSM-packet signals as an RCN-packet signal;
wherein the IDT-receiver receives a multiplicity of RCN-packet signals transmitted from the multiplicity of remote cell nodes which remote multiplicity of remote cell nodes includes a subset of said plurality of remote cell nodes;
wherein each intermediate data terminal includes IDT-memory (515) to store the received multiplicity of RCN-packet signals, with said IDT-transmitter (518, 519) responsive to a second polling signal for transmitting the stored multiplicity of packet signals as an IDT-packet signal; and
wherein the central data terminal (CDT) (120) has a CDT-transmitter for transmitting the second polling signal to said plurality of intermediate data terminals (114).

8. A network as claimed in any one of claims 3 to 7, wherein each said network service module further includes NSM-receiver means (316) for receiving a command signal transmitted from one of said plurality of remote cell nodes, and

NSM-processor means (314) responsive to the command signal for adjusting the carrier frequency of said NSM-transmitter (318) and updating an internal clock.

9. A network as claimed in any one of claims 3 to 7, wherein each network service module (110) further includes an NSM-receiver (316) for receiving a command signal, an NSM-controller (314) responsive to the received command signal to set a carrier frequency, the NSM-packet data being transmitted at the carrier frequency;

wherein each remote cell node includes an RCN-transmitter (418) for transmitting by wireless radio the command signal, and an RCN-memory (415) for storing the received multiplicity of NSM-packet signals, with said RCN-transmitter (418) responsive to a first polling signal for transmitting by wireless radio the stored multiplicity of NSM-packet signals as an RCN-packet signal, and

wherein each intermediate data terminal includes a first IDT-transmitter (518) for transmitting by wireless radio the first polling signal using a first polling access protocol to each of said plurality of remote cell nodes (112);

a first IDT-receiver (521) for receiving the multiplicity of RCN-packet signals transmitted from a multiplicity of the remote cell nodes, which multiplicity includes a subset of said plurality of remote cell nodes, IDT-memory (515) for storing the received multiplicity of RCN-packet signals, a second IDT-receiver (522) for receiving the second polling signal and a second IDT-transmitter (519) responsive to the second polling signal for transmitting the stored multiplicity of RCN-packet signals as an IDT-packet signal; and

wherein the central data terminal (CDT) has a CDT-transmitter (618) for transmitting the second polling signal using a second polling access protocol to said plurality of intermediate data terminals.

10. A network as claimed in any one of claims 1 to 9, wherein said plurality of physical devices (320, 322, 324) includes a respective plurality of electricity meters.

11. A network as claimed in any one of claims 1 to 9, wherein said plurality of physical devices (320, 322, 324) includes a respective plurality of water meters.

12. A network as claimed in any one of claims 1 to 9, wherein said plurality of physical devices (320, 322, 324) includes a respective plurality of gas meters.

13. A method of collecting network service module (NSM) data generated by a plurality of physical devices coupled to a plurality of network service modules respectively located within a geographic area, by a plurality of remote cell nodes located within the geographic area and spaced with each network service module of the plurality of network service modules within a range of at least two remote cell nodes for receiving NSM-data by at least two remote cell nodes, comprising the steps of:-

transmitting by wireless radio respective NSM-data generated by a respective physical device using a respective network service module, as an NSM-packet signal;

receiving at the plurality of remote cell nodes (RCN) a plurality of NSM-packet signals transmitted from a plurality of network services modules;

storing the plurality of NSM-packet signals;

transmitting from each of the plurality of remote cell nodes the stored plurality of NSM-packet signals as a plurality of RCN-packet signals; and

receiving the plurality of RCN-packet signals at a central data terminal (CDT).

14. A method as claimed in Claim 13, further comprising the steps of:-

transmitting the respective NSM-data from each of the plurality of physical devices as an NSM-packet signal at a time selected pseudorandomly,

receiving, at each remote cell node (RCN) a multiplicity of NSM-packet signals transmitted from a multiplicity of network service modules, with the multiplicity of network service modules including a subset of said plurality of network service modules;

polling the plurality of remote cell nodes with a plurality of polling signals, respectively, from a plurality of intermediate data terminals;

transmitting from each of the plurality of remote cell nodes, responsive to the plurality of polling signals, the respective stored multiplicity of NSM-packet signals as an RCN-packet signal, respectively;

receiving a multiplicity of RCN-packet signals at each of a plurality of intermediate data terminals;

storing the received multiplicity of RCN-packet signals received at the respective intermediate data terminal;

transmitting, responsive to a second polling signal, from each of the plurality of intermediate data terminals, the respective stored multiplicity of RCN-packet signals as an IDT-packet signal, and

receiving a plurality of IDT-packet signals at a central data terminal (CDT).

15. A method as claimed in Claim 13 or Claim 14, further comprising the steps of:-

sending, responsive to receiving a multiplicity of RCN-packet signals, an acknowledgement signal to a respective one of the plurality of remote cell nodes;

receiving, at the respective remote cell node, the acknowledgement signal;

receiving, at the respective remote cell node, additional NSM-packet signals from network service modules; and
overwriting, at the respective remote cell node, the stored multiplicity of NSM-packet signals with the additional NSM-packet signals.

16. A method as claimed in any one of claims 13 to 15, further comprising the steps of:-

correlating, in time, the multiplicity of NSM-packet signals;
identifying a duplicate NSM-packet signal from the multiplicity of NSM-packet signals,
receiving additional NSM-packet signals from network service modules; and
overwriting the duplicate NSM-packet signal with the additional NSM-packet signals.

17. A method as claimed in any one of claims 13 to 15, further comprising the steps of:-

transmitting, in response to detecting an alarm condition at a network service module, an alarm signal;
transmitting the alarm signal in the NSM-packet signal; and
transmitting, in response to receiving the alarm signal, an RCN-packet signal having the alarm signal.

**Patentansprüche**

1. Kommunikationsnetz zur Erfassung von Daten, die durch eine Anzahl physikalischer Geräte erzeugt wurden, welche sich in einem geographischen Gebiet befinden und diese Daten zu einer Zentrale übertragen, dadurch gekennzeichnet, daß dieses Netz folgendes aufweist:

mehrere Netzdienstmoduln (NSM)(110), wobei jeder Netzdienstmodul mit einem zugehörigen physikalischen Gerät (320, 322, 324) gekoppelt ist, das entsprechende NSM-Daten erzeugt, wobei jeder Netzdienstmodul (110) folgendes aufweist:
einen NSM- Sender (318) zur Funkübertragung der jeweiligen NSM-Daten vom jeweiligen physikalischen Gerät (320, 322, 324) als NSM-Paketsignal;
mehrere Fernzellknoten (RCN)(112), die sich in dem geographischen Gebiet in solchen Abständen zueinander befinden, daß jeder Netzdienstmodul (110) im Bereich von mindestens zwei Fernzellknoten (112) liegt, wobei jeder Fernzellknoten
einen RCN-Empfänger (416) zum Empfang einer Vielzahl von NSM-Paketsignalen, die von mehreren Netzdienstmoduln (110) übertragen werden, und
einen RCN-Sender (418) zur Übertragung der Vielzahl von NSM-Paketsignalen als RCN-Paketsignal aufweist;
ein zentrales Datenterminal (CDT) (120) mit einem CDT-Empfänger (616) zum Empfang mehrerer RCN-Paketsignale,
einem CDT-Prozessor (614) zur Dekodierung der RCN-Paketsignale als Anzahl von NSM-Daten, und
einem CDT-Speicher (615) zur Speicherung der Anzahl von NSM-Daten in einer Datenbank.

2. Netz nach Patentanspruch 1, wobei die übertragenen NSM-Paketsignale gleichzeitig von mindestens zwei Fernzellknoten empfangen werden.

3. Netz nach Patentanspruch 1 oder 2, das weiterhin folgendes aufweist:

mehrere Zwischendatenterminals (IDT)(114), von denen jedes einen IDT-Empfänger (152) zum Empfang einer Vielzahl von RCN-Paketsignalen, die von mehreren Fernzellknoten (110) übertragen werden, und
einen IDT-Sender (519) zur Übertragung der Vielzahl von RCN-Paketsignalen als ein IDT-Paketsignal an das zentrale Datenterminal (120) aufweist,
wobei der CDT-Prozessor (614) in der Lage ist, mehrere IDT-Paketsignale als Anzahl von NSM-Daten zu dekodieren und im CDT-Speicher (615) zu speichern.

4. Netz nach Patentanspruch 3, wobei jeder der Netzdienstmoduln (110) folgendes aufweist:

NSM-Prozessormittel (314), die auf das Erkennen eines Alarmzustandes mit der Erzeugung eines Alarmsignals reagieren,
wobei der NSM-Sender (318) als Reaktion auf das Alarmsignal ein NSM-Paketsignal überträgt, das das Alarmsignal enthält;
wobei jeder Fernzellknoten RCN-Prozessormittel (414) aufweist, die bei Empfang des Alarmsignals den RCN-Sender (418) veranlassen, ein RCN-Paketsignal zu übertragen, das das Alarmsignal enthält; und
wobei jedes Zwischendatenterminal IDT-Prozessormittel (514) aufweist, die bei Empfang eines mit einem Alarmsignal versehenes RCN-Paketsignal den IDT-Sender (519) veranlassen, ein IDT-Paketsignal zu übertragen, das das Alarmsignal enthält.

5. Netz nach Patentanspruch 3 oder 4, wobei der IDT-Sender (518) bei Empfang der entsprechenden Vielzahl von RCN-Paketsignalen von einem der Fernzellknoten (112) an den entsprechenden Fernzellknoten ein Quittungssignal überträgt.

6. Netz nach Patentanspruch 5, wobei der entsprechende Fernzellknoten (112) bei Empfang des Quittungssignals die Anzahl von NSM-Paketsignalen bei Empfang weiterer NSM-Paketsignale überschreibt.

7. Netz nach einem der Patentansprüche 3 bis 6,

wobei jeder NSM-Sender zu einem bestimmten Zeitpunkt ein NSM-Paketsignal überträgt, der gleichsam zufällig im Rahmen eines bestimmten Zeitraumes ausgewählt wird;
wobei der RCN-Empfänger (416) eine Vielzahl von NSM-Paketsignalen von mehreren Netzdienstmoduln (110) empfängt, wobei diese Vielzahl eine Untermenge von mehreren Netzdienstmoduln umfaßt:
wobei der RCN-Sender (418) bei Empfang eines ersten Abrufsignals die gespeicherte Vielzahl von NSM-Paketsignalen als RCN-Paketsignal überträgt;
wobei der IDT-Empfänger eine Vielzahl von RCN-Paketsignalen von einer Vielzahl von Fernzellknoten empfängt, wobei diese Vielzahl von Fernzellknoten eine Untermenge von mehreren Fernzellknoten umfaßt;
wobei jedes Zwischendatenterminal einen IDT-Speicher (515) zur Speicherung der empfangenen Vielzahl von RCN-Paketsignalen aufweist, wobei der IDT-Sender (518, 519) bei Empfang eines zweiten Abrufsignals die gespeicherte Vielzahl von Paketsignalen als IDT-Paketsignal überträgt; und
wobei das zentrale Datenterminal (CDT)(120) einen CDT-Sender zur Übertragung des zweiten Abrufsignals an die Anzahl von Zwischendatenterminals (114) aufweist.

8. Netz nach einem der Patentansprüche 3 bis 7, wobei jeder Netzdienstmodul weiterhin NSM-Empfangsmittel (316) zum Empfang eines Befehlssignals, das von einem der Anzahl von Fernzellknoten übertragen wird, und

NSM-Prozessormittel (314) aufweist, die bei Empfang des Befehlssignals die Trägerfrequenz des NSM-Senders (318) anpassen und eine interne Uhr aktualisieren.

9. Netz nach einem der Patentansprüche 3 bis 7, wobei jeder Netzdienstmodul (110) weiterhin einen NSM-Empfänger (316) zum Empfang eines Befehlssignals und einen NSM-Controller (314) aufweist, der bei Empfang des Befehlssignals eine Trägerfrequenz bereitstellt, auf der die NSM-Paketdaten übertragen werden;

wobei jeder Fernzellknoten einen RCN-Sender (418) zur Funkübertragung des Befehlssignals und einen RCN-Speicher (415) zur Speicherung der empfangenen Vielzahl von NSM-Paketsignalen aufweist, wobei dieser RCN-Sender (418) bei Empfang eines ersten Abrufsignals die gespeicherte Vielzahl von NSM-Paketsignalen als RCN-Paketsignal überträgt, und
wobei jedes Zwischendatenterminal einen ersten IDT-Sender (518) zur Funkübertragung des ersten Abrufsignals unter Verwendung eines ersten Abrufzugangsprotokolls zu jedem der Anzahl von Fernzellknoten (112);
einen ersten IDT-Empfänger (521) zum Empfang der Vielzahl von RCN-Paketsignalen, die von einer Anzahl von Fernzellknoten übertragen wurden, wobei diese Anzahl eine Untermenge mehrerer Fernzellknoten umfaßt, einen IDT-Speicher (515) zur Speicherung der empfangenen Vielzahl von RCN-Paketsignalen, einen zweiten IDT-Empfänger (522) zum Empfang des zweiten Befehlssignals und einen zweiten IDT-Sender (519) aufweist, der bei Empfang des zweiten Abrufsignals die gespeicherte Vielzahl von RCN-Paketsignalen als ein IDT-Paketsignal überträgt; und
wobei das zentrale Datenterminal (CDT) einen CDT-Sender (618) für die Übertragung des zweiten Abrufsignals unter Verwendung eines zweiten Abrufzugangsprotokolls an die Anzahl von Zwischendatenterminals aufweist.

10. Netz nach einem der Patentansprüche 1 bis 9, wobei die Anzahl physikalischer Geräte (320, 322, 324) eine entsprechende Anzahl elektrischer Meßgeräte aufweist.

11. Netz nach einem der Patentansprüche 1 bis 9, wobei die Anzahl physikalischer Geräte (320, 322, 324) eine entsprechende Anzahl von Wassermeßgeräten aufweist.

12. Netz nach einem der Patentansprüche 1 bis 9, wobei die Anzahl physikalischer Geräte (320, 322, 324) eine entsprechende Anzahl von Gasmeßgeräten aufweist.

13. Verfahren zur Erfassung von Daten aus den Netzdienstmoduln (NSM), die durch mehrere, mit mehreren Netzdienstmoduln gekoppelte und in einem geographischen Gebiet befindliche physikalische Geräte durch mehrere in dem geographischen Gebiet befindliche Fernzellknoten erzeugt werden, wobei die Fernzellknoten solche Abstände aufweisen, daß jeder Netzdienstmodul im Bereich von mindestens zwei Fernzellknoten liegt und NSM-Daten von mindestens zwei Fernzellknoten empfangen kann, wobei dieser Vorgang folgende Schritte umfaßt:

Funkübertragung der jeweiligen, von einem physikalischen Gerät unter Verwendung des jeweiligen Netzdienstmoduls erzeugten NSM-Daten als ein NSM-Paketsignal;
Empfang mehrerer von mehreren Netzdienstmoduln gesendeten NSM-Paketsignale durch mehrere Fernzellknoten (RCN);
Speicherung der Anzahl von NSM-Paketsignalen;
Übertragung der gespeicherten Anzahl von NSM-Signalen als eine Anzahl von RCN-Paketsignalen von jedem der Fernzellknoten; und
Empfang der Anzahl von RCN-Paketsignalen an einem zentralen Datenterminal (CDT).

14. Verfahren nach Patentanspruch 13, das weiterhin die folgenden Schritte umfaßt:

Übertragung der jeweiligen NSM-Daten von jedem der physikalischen Geräte als NSM-Paketsignal zu einer quasi zufällig gewählten Zeit,
Empfang einer Vielzahl der von mehreren Netzdienstmoduln übertragenen NSM-Paketsignale an jedem Fernzellknoten (RCN), wobei die Vielzahl der Netzdienstmoduln eine Untermenge von Netzdienstmoduln enthält;
Abruf der Fernzellknoten mit jeweils mehreren Abrufsignalen von mehreren Zwischendatenterminals;
als Antwort auf die Abrufsignale Übertragung der jeweiligen gespeicherten Vielzahl von NSM-Paketsignalen als je ein RCN-Paketsignal von jedem Fernzellknoten;
Empfang einer Vielzahl von RCN-Paketsignalen an jedem der jeweiligen Zwischendatenterminals;
Speicherung der empfangenen Vielzahl von RCN-Paketsignalen, die an jedem Zwischendatenterminal eingehen;
nach einem zweiten Abrufsignal Übertragung der jeweils gespeicherten Vielzahl von RCN-Paketsignalen als ein IDT-Paketsignal von jedem der Zwischendatenterminals; und
Empfang mehrerer IDT-Paketsignale an einem zentralen Datenterminal (CDT).

15. Verfahren nach Patentanspruch 13 oder 14, das weiterhin folgende Schritte aufweist:

Nach Empfang einer Vielzahl von RCN-Paketsignalen Sendung eines Quittungssignals an den jeweiligen Fernzellknoten;

Empfang des Quittungssignals am jeweiligen Fernzellknoten;
Empfang weiterer NSM-Paketsignale von den Netzdienstmoduln am jeweiligen Fernzellknoten; und
Überschreiben der gespeicherten Vielzahl von NSM-Paketsignalen mit weiteren NSM-Paketsignalen am jeweiligen Fernzellknoten.

16. Verfahren nach einem der Patentansprüche 13 bis 15, das weiterhin folgende Schritte aufweist:

Zeitbezogene Korrelation der Vielzahl von NSM-Paketsignalen;
Identifizierung eines NSM-Paketsignalduplikats aus der Vielzahl der NSM-Paketsignale;
Empfang weiterer NSM-Paketsignale von Netzdienstmoduln; und
Überschreiben des NSM-Paketsignalduplikats mit weiteren NSM-Paketsignalen.

17. Verfahren nach einem der Patentansprüche 13 bis 15, das weiterhin folgende Schritte aufweist:

Nach Feststellung eines Alarmzustandes an einem Netzdienstmodul Übertragung eines Alarmsignals;
Übertragung des Alarmsignals im NSM-Paketsignal; und
bei Empfang des Alarmsignals Übertragung eines RCN-Paketsignal, das das Alarmsignal enthält.

## Revendications

1. Réseau de transmissions pour rassembler des informations fournies par un ensemble d'appareils situés dans une zone géographique, à destination d'un poste central, réseau *caractérisé* en ce qu'il comporte:

un certain nombre de modules de service (110) dits modules NSM, associés chacun à un appareil (320,322,324) qui fournit des informations NSM correspondantes,
chaque module NSM (110) comportant un émetteur NSM (318) pour envoyer par radio les informations NSM provenant de chaque appareil (320,322,324), sous la forme d'un signal NSM condensé;
un ensemble de noeuds de relais éloignés (112) dits noeuds RCN, situés dans la zone géographique considérée, chaque module de service (110) étant à portée d'au moins deux noeuds de relais éloignés (112);
chaque noeud de relais éloigné (112) comportant un récepteur RCN (416), adapté à recevoir des séries de signaux condensés NSM provenant d'un ensemble de modules de service (110),

et un émetteur RCN (418) pour envoyer les séries de signaux NSM condensés, groupés en un signal RCN condensé;

un poste central d'information (120), dit terminal CDT, comportant

un récepteur CDT (616) adapté à recevoir des séries de signaux RCN condensés,

un processeur CDT (614), pour décoder les séries de signaux RCN condensés et les transformer en séries d'informations NSM,

et une mémoire CDT (615) pour conserver en attente les séries d'informations NSM dans une base de données.

2. Réseau selon la revendication 1, dans lequel les signaux NSM condensés sont reçus en même temps par au moins deux noeuds-relais éloignés.

3. Réseau selon la revendication 1 ou la revendication 2, comportant en outre:

un certain nombre de terminaux intermédiaires d'information (114), dits terminaux IDT, comportant chacun

un récepteur IDT (152), adapté à recevoir une série de signaux condensés RCN provenant d'un certain nombre de noeuds-relais éloignés,

et un émetteur IDT (519), pour envoyer les séries de signaux condensés RCN sous la forme groupée d'un signal condensé IDT, à destination du poste central d'information (120);

et dans lequel le processeur CDT (614) est adapté à décoder une série de signaux condensés IDT, pour les transformer en séries d'informations NSM, à mettre en attente dans la mémoire CDT (615).

4. Réseau selon la revendication 3, dans lequel chaque module de service (110) de ce réseau comporte:

un système processeur NSM (314) prévu pour réagir en présence d'une condition d'alarme, pour produire un signal d'alarme, et

dans lequel l'émetteur NSM (318), réagissant au signal d'alarme, produit un signal condensé NSM qui contient ce signal d'alarme;

dans lequel chaque noeud-relais éloigné comporte un système processeur RCN (414), adapté à réagir à la réception du signal d'alarme pour faire envoyer par l'émetteur RCN (418) un signal condensé RCN comportant le signal d'alarme;

et dans lequel chaque terminal intermédiaire d'information comporte un système processeur IDT (514), adapté à réagir à la réception d'un signal condensé RCN qui comporte le signal d'alarme, pour faire envoyer par l'émetteur IDT (519) un signal condensé IDT contenant le signal d'alarme.

5. Réseau selon la revendication 3 ou à la revendication 4, dans lequel l'émetteur IDT (518) est adapté à réagir à la réception de l'un des signaux de la série de signaux condensés RCN, provenant de l'un des noeuds-relais lointains (112), pour envoyer un signal d'accusé de réception à celui des noeuds-relais qui est concerné.

6. Réseau selon la revendication 5, dans lequel le noeud-relais concerné (112) est adapté à réagir au signal d'accusé de réception pour superposer les séries de signaux condensés NSM en réponse à des signaux condensés NSM additionnels.

7. Réseau selon l'une des revendications 3 à 6, dans lequel chaque émetteur NSM envoie un signal condensé NSM à un instant choisi d'une manière pseudo-aléatoire dans une période de temps prédéterminée;

dans lequel le récepteur RCN (416) reçoit des séries de signaux condensés NSM provenant d'un ensemble de modules de service (110), qui contient un sous-ensemble de ceux-ci;

dans lequel l'émetteur RCN (418) est adapté à réagir à un premier signal de recueil, pour envoyer la série en attente de signaux condensés NSM, sous la forme d'un signal condensé RCN;

dans lequel le récepteur IDT reçoit une série de signaux condensés RCN, provenant d'un ensemble de noeuds-relais éloignés, qui contient un sous-ensemble desdits noeuds;

dans lequel chaque terminal intermédiaire d'information comporte une mémoire IDT (515) pour conserver en attente après réception les séries de signaux condensés RCN, l'émetteur IDT correspondant (518,519) étant adapté à réagir à un deuxième signal de recueil pour envoyer les séries en attente de signaux condensés, sous la forme d'un signal condensé IDT;

et dans lequel le poste central d'information CDT (120) comporte un émetteur CDT, pour envoyer le deuxième signal de recueil aux terminaux intermédiaires concernés (114).

8. Réseau selon l'une des revendications 3 à 7, dans lequel chaque module de service de ce réseau comporte en outre:

un système récepteur NSM (316), pour recevoir un signal d'ordre provenant de l'un des noeuds-relais éloignés concernés,

et un système processeur NSM (314) adapté à réagir à ce signal d'ordre pour adapter la fréquence porteuse de l'émetteur NSM concerné (318), et pour mettre en marche une horloge interne.

9. Réseau selon l'une des revendications 3 à 7, dans lequel chaque module de service (110) de ce réseau comporte en outre un récepteur NSM (316) pour recevoir un signal d'ordre, un relais de commande NSM (314), adapté à réagir au signal d'ordre pour choisir une fréquence porteuse qui servira à l'émission du signal NSM condensé;

dans lequel chaque noeud-relais éloigné comporte un émetteur RCN (418) pour envoyer le signal d'ordre par radio, et une mémoire RCN (415) pour conserver en attente à réception les séries de signaux condensés NSM, l'émetteur RCN (418) étant adapté à réagir à un premier signal de recueil, pour envoyer par radio la série en attente de signaux condensés NSM, sous la forme d'un signal condensé RCN, et dans lequel chaque terminal intermédiaire d'information comporte un premier émetteur IDT (518) pour envoyer par radio le premier signal de recueil, en utilisant un premier protocole d'accès, à destination de chacun des noeuds-relais concernés (112),

et un premier récepteur IDT (521), pour recevoir des séries de signaux condensés RCN provenant d'un ensemble de noeuds-relais éloignés, qui contient un sous-ensemble desdits noeuds;

une mémoire IDT (515), pour conserver en attente à réception des séries de signaux condensés RCN, un deuxième récepteur IDT (522) pour recevoir le deuxième signal de recueil, et un deuxième émetteur IDT (519) déclenché par le deuxième signal de recueil, pour envoyer la série en attente de signaux condensés RCN, sous la forme d'un signal condensé IDT;

et dans lequel le poste central d'information (CDT) comporte un émetteur CDT (618) pour envoyer le deuxième signal de recueil, en utilisant un deuxième protocole d'accès à destination de l'ensemble des terminaux intermédiaires concernés.

10. Réseau selon l'une des revendications 1 à 9, dans lequel l'ensemble des appareils concernés (320,322,324) comporte un ensemble correspondant de compteurs électriques.

11. Réseau selon l'une des revendications 1 à 9, dans lequel l'ensemble des appareils concernés (320,322,324) comporte un ensemble correspondant de compteurs à eau.

12. Réseau selon l'une des revendications 1 à 9, dans lequel l'ensemble des appareils concernés (320,322,324) comporte un ensemble correspondant de compteurs à gaz.

13. Procédé pour recueillir des informations concernant des modules de service d'un réseau, dits modules NSM, ces informations étant produites par un ensemble d'appareils associés à un ensemble de modules de service du réseau, situés dans une zone géographique, et relayées par un ensemble de noeuds-relais lointains également situés dans la zone géographique, avec un espacement tel que chacun des modules de service du réseau soit à portée d'au moins deux noeuds-relais lointains, pour qu'on reçoive des informations NSM transmises par au moins deux noeuds-relais lointains, procédé comportant les particularités opératoires suivantes:

on transmet par radio les informations NSM concernant chaque module, sous la forme d'un signal NSM condensé;
un ensemble de noeuds-relais lointains (RCN) reçoit l'ensemble de ces signaux NSM condensés provenant de l'ensemble des modules de service du réseau;
l'ensemble des signaux NSM condensés ainsi reçus par l'ensemble des noeuds-relais lointains y est pris en mémoire en attente;
chacun des noeuds-relais lointains de l'ensemble considéré assure ensuite l'envoi de l'ensemble des signaux NSM condensés, sous la forme d'un ensemble de signaux RCN condensés;
et un poste central d'information (CDT) reçoit alors l'ensemble de ces signaux RCN condensés.

14. Procédé selon la revendication 13, comportant en outre les particularités opératoires suivantes:

l'envoi des diverses informations NSM, assuré par chaque émetteur de l'ensemble considéré sous la forme d'un signal NSM condensé, s'effectue à un instant qui est choisi d'une manière pseudo-aléatoire;
chaque noeud-relais lointain (RCN) reçoit un ensemble de signaux NSM condensés émis par un ensemble de modules de service du réseau (NSM), cet ensemble de modules de service comportant un sous-ensemble de ces modules;
on actionne chacun des noeuds-relais lointains de l'ensemble, pour obtenir leurs informations au moyen de signaux de recueil d'un premier genre, émis chacun respectivement par un ensemble de terminaux intermédiaires;

chacun des noeuds-relais de l'ensemble concerné réagit à la réception des signaux de recueil, pour émettre sous forme d'un signal RCN condensé l'ensemble des signaux NSM condensés conservés en mémoire en attente par chaque noeud-relais;

les signaux de cet ensemble de signaux RCN condensés sont reçus par chacun des terminaux intermédiaires d'un groupe de terminaux intermédiaires;

ces terminaux Intermédiaires assurent chacun la prise en mémoire en attente des signaux RCN condensés ainsi reçus;

en réponse à un signal de recueil d'un deuxième genre, chacun de ces terminaux intermédiaires envoie, sous forme d'un signal IDT condensé, l'ensemble des signaux RCN condensés qu'il avait conservés en attente;

et le poste central (CDT) reçoit ainsi l'ensemble des signaux IDT condensés provenant des terminaux intermédiaires.

15. Procédé selon la revendication 13 ou la revendication 14, comportant en outre les particularités opératoires suivantes:

en réponse à la réception d'un ensemble de signaux RCN condensés, un signal d'accusé de réception est envoyé, respectivement, à chacun des noeuds-relais lointains de l'ensemble concerné;

chaque noeud-relais lointain reçoit ainsi le signal d'accusé de réception qui le concerne;

chaque noeud-relais lointain reçoit également des signaux NSM condensés additionnels provenant des modules de service du réseau;

à l'endroit de chaque noeud-relais lointain, les signaux NSM condensés additionnels se superposent ainsi à l'ensemble des signaux NSM condensés déjà mis en mémoire en attente.

16. Procédés selon l'une des revendications 13 à 15, comportant en outre les particularités opératoires suivantes:

on assure la corrélation, en fonction du temps, de l'ensemble des signaux NSM condensés;

on identifie un signal NSM condensé en double dans l'ensemble des signaux NSM condensés;

on reçoit les signaux NSM condensés additionnels provenant des modules de service du réseau;

et on superpose au signal NSM condensé en double les signaux NSM condensés additionnels.

17. Procédé selon l'une des revendications 13 à 15, comportant en outre les particularités opératoires suivantes:

en réponse à la détection d'une condition d'alarme à l'endroit d'un module de service du réseau, ce module émet un signal d'alarme; ce signal d'alarme est transmis dans le signal NSM condensé;

en réponse à la réception du signal d'alarme, on émet alors un signal RCN condensé qui contient le signal d'alarme.

Fig.1

COMMANDS

CDT — 120

INFORMATION

IDT — 114

IDT | SCADA — 114

IDT — 114

SPECIAL

112

112

112

112

112

112

112

RCNs

NSMs

110 110 110 110 110 110 110 110 110 110 110 110

Fig. 2

Fig. 3

| PREAMBLE | OPENING FRAME | MESSAGE TYPE | MESSAGE IDENT'N | SERVICE MODULE TYPE | MESSAGE NUMBER | SERVICE MODULE ADDRESS | DATA FIELD | ERROR DETECTION | CLOSING FRAME |
|---|---|---|---|---|---|---|---|---|---|

26

## Fig.4

| GROUP | | APPLICATION |
|---|---|---|
| 1. · BILLING | 1.1 | BASIC MONTHLY BILLING (RES./COMMERCIAL) |
| | 1.2 | TIME OF USE BILLING (RES./COMMERCIAL) |
| | 1.3 | DEMAND BILLING (RES./COMMERCIAL) |
| | 1.4 | CONSOLIDATED BILLS FOR MULTI-SITE CUSTOMERS E.G. BILLBOARD OPERATORS (COMMERCIAL) |
| | 1.5 | PREPAYMENT CUSTOMER SUPPORT (RESIDENTIAL) |
| 2. · SPECIAL READS | 2.1 | CUSTOMER INQUIRIES (1-3 MONTH DAILY CONSUMPTION RECORD AVAILABLE FOR EACH CUSTOMER) |
| | 2.2 | OPENING ACCOUNTS (CURRENT READING AVAILABLE) |
| | 2.3 | CLOSING ACCOUNTS (CURRENT READING AVAILABLE) |
| | 2.4 | REFUND AUTHORIZATION ON PREPAYMENTS |
| 3. · UNAUTHORIZED SERVICE USE | 3.1 | SOURCE OF LOSSES |
| | 3.2 | METER TAMPER DETECTION AND MONITORING |
| | 3.3 | REVENUE DIVERSION ESTIMATION |
| 4. · GRID STATUS | 4.1 | DISTRIBUTION GRID OUTAGE (FUSE, RECLOSER, SECTIONALIZER, DISTRIBUTION TRANSFORMER) |
| | 4.2 | INDIVIDUAL SERVICE LOSS |
| | 4.3 | RESTORATION NOTIFICATION |
| 5. · SERVICE QUALITY | 5.1 | OUTAGE INFORMATION |
| | 5.2 | VOLTAGE ON LINES |
| 6. · GRID CONFIGURATION MANAGEMENT | 6.1 | CAPACITOR BANK SWITCHING |
| | 6.2 | TRANSFORMER LOAD MANAGEMENT |
| | 6.3 | FEEDER LOAD MANAGEMENT |
| | 6.4 | SECTIONALIZER CONTROL |
| 7. · LOAD CONTROL | 7.1 | AIR CONDITIONERS |
| | 7.2 | WATER HEATERS |
| | 7.3 | POOL PUMPS/HEATERS |
| 8. · SERVICE CONTROL | 8.1 | SERVICE CONNECT |
| | 8.2 | SERVICE DISCONNECT |
| | 8.3 | SERVICE LIMITATION |
| 9. · LOAD SURVEY | 9.1 | 15 MINUTE RESOLUTION LOAD SURVEY |
| 10. · SUB-STATION MONITORING SUB-SCADA AND SCADA | 10.1 | TRANSFORMERS (TEMPERATURE, VOLTAGE, DEMAND, ETC.) |
| | 10.2 | OTHER |
| 11. · LOAD CURTAILMENT MONITORING AND NOTIFICATION | 11.1 | HIGH RESOLUTION READINGS ON DEMAND |
| | 11.2 | CENTRALIZED CONTROL FOR MULTIPLE-STATE GEOGRAPHIC AREAS |
| | 11.3 | CUSTOMER NOTIFICATION (CRT, PAGE, RADIO) |

# Fig. 5

LIGHT I/P
TO RECHARGE
BATTERY

SENSOR SUBSYSTEM

DIGITAL CONTROL SUBSYSTEM

+3V

+3V

242  243  230

FWD/
REV SENSOR O/P

220

221

ROO-
RO3

STORAGE
MEMORY

231

TILT
SENSOR

222

232  233

COVER SENSOR

μP

224  ACOUSTIC
SENSOR

FILTER  225

CLOCK

335

ANT.

250  MODULATION DEVICE

322

223  E-FIELD
SENSOR

E-FIELD
PRESENCE

MAGNETIC
SENSOR

H-FIELD PRESENCE

227

A/D
CONVERTER

226

TEMP.
SENSOR

TEMPERATURE

328

228  BATTERY LEVEL
SENSOR

229  DIRECT CONSUMPTION
MONITOR

110

*Fig. 6*

*Fig. 7*

# Fig. 8

ANY TAMPER FLAG
REVERSE ROTATION
E-FIELD
H-FIELD
TILT
COVER

-128kwh          0          +128kwh

10kwh     INCREMENTS

36     37     38

SUN APR 30
MON
TUE
WED
THU
FRI
SAT
SUN MAY 07
MON
TUE
WED
THU
FRI
SAT
SUN MAY 14
MON
TUE
WED
THU
FRI
SAT
SUN MAY 21
MON
TUE
WED
THU
FRI
SAT
SUN MAY 28
MON
TUE
WED
THU
FRI
SAT
SUN JUN 04
MON
TUE
WED
THU
FRI
SAT

# *Fig.9*

```
┌──────────┐        ┌────────────┐        ┌──────────────┐
│          │        │            │        │  TRANSMITTER │──┐
│  MEMORY  │────────│ PROCESSOR  │────┬───│              │  │      ▽──422
│          │        │            │    │   └──────────────┘  ├──◯
└──────────┘        └────────────┘    │   ┌──────────────┐  │
     │                   │            └───│   RECEIVER   │──┘
    415                 414               │              │
                                          └──────────────┘
                                                 416
```

                                          418

# *Fig.10*

                              523

```
┌──────────────┐     ┌─────────────────────┐    ┌────────────┐    ┌──────────────┐
│COMMUNICATIONS│     │ ┌─────────────────┐ │    │            │    │  TRANSMITTER │──┐
│   MEDIUM     │─────┤ │   TRANSMITTER   │─┼────│ PROCESSOR  │───│              │  │   522 ▽
│              │     │ └─────────────────┘ │    │            │    └──────────────┘  ├──◯
└──────────────┘     │ ┌─────────────────┐ │    │            │    ┌──────────────┐  │
     525             │ │    RECEIVER     │─┼────│            │───│   RECEIVER   │──┘
                     │ └─────────────────┘ │    └─────┬──────┘    │              │
                     └─────────────────────┘          │          └──────────────┘
                              522                 ┌─────────┐          521
                                                  │ MEMORY  │─515
                                                  └─────────┘
```

519   518   514

## Fig.11

PROCESSOR
614

MEMORY
615

625

TRANSMITTER
618

RECEIVER
616

COMMUNICATIONS
MEDIUM
525

EP 0 596 913 B1

Fig.12

CENTRAL
DATA
TERMINAL-CDT

SATELLITE

CDT

CRITICAL SCADA

SCADA
SITE

INTERMEDIATE
DATA
TERMINAL-IDT

REGIONAL LEVEL

SCADA
RCN

POLLED LINK
RCN TO IDT

REMOTE
CELL
NODE-RCN

CELLULAR LEVEL

NETWORK
SERVICE
MODULE-NSM

ACCESS LEVEL

REGION A

REGION B

EP 0 596 913 B1

IDT RECEIVES ALL RCN'S

IDT

TYPICAL RCN SERVICE AREA

Fig.13